# EUROPEAN PATENT SPECIFICATION

(11) **EP 4 670 022 B1**
(45) Date of publication and mention of the grant of the patent: **21.10.2026**
(21) Application number: 24875805.4
(22) Date of filing: 21.02.2024
(51) Int. Cl.: G06F 1/20, G06N 10/40

(54) **QUANTUM COMPUTER HEAT TRACKING AND CONDITIONAL COOLING**
WÄRMEVERFOLGUNG UND BEDINGTE KÜHLUNG FÜR QUANTENCOMPUTER
SUIVI DE LA CHALEUR D'UN ORDINATEUR QUANTIQUE ET REFROIDISSEMENT CONDITIONNEL

(30) Priority: 21.02.2023 US 202363486083 P
(43) Date of publication of application: 31.12.2025
(73) Proprietor: Quantinuum LLC, Broomfield, Colorado 80021 (US)
(72) Inventor: WALKER, James A., Broomfield, CO 80021 (US); GAEBLER, John, Broomfield, CO 80021 (US); BOHNET, Justin, Broomfield, CO 80021 (US); HANKIN, Aaron, Broomfield, CO 80021 (US)
(74) Representative: Haseltine Lake Kempner LLP
(86) International application number: PCT/US2024/016626
(87) International publication number: WO 2025/116945

(56) References cited:
- EP-A1- 3 843 018
- US-A1- 2021 398 008
- US-A1- 2023 050 581

## Description

### TECHNICAL FIELD

Various embodiments relate to the conditional cooling of quantum objects by a quantum system. For example, various embodiments relate to performance of cooling operations in accordance with cooling operation parameters determined based on the tracking of heating of quantum objects of the quantum system. In various embodiments, the quantum system is a quantum computer, such as a quantum charge-coupled device (QCCD)-based quantum computer.

### BACKGROUND

Quantum charge-coupled device (QCCD) is a quantum computing architecture in which quantum objects are confined within a quantum object confinement apparatus and at least some of the quantum objects are used to perform quantum calculations. The quantum objects may be transported between different locations of the quantum object confinement apparatus. However, these transportation operations cause the quantum objects to become heated. Cooling operations can be performed on the quantum objects to cool the quantum objects to a desired level. However, these cooling operations are slow compared to other operations performed by the quantum computer and therefore amount to a significant portion of the processing time of the quantum computer. Through applied effort, ingenuity, and innovation many deficiencies of such conventional cooling systems have been solved by developing solutions that are structured in accordance with the embodiments of the present invention, many examples of which are described in detail herein.
Reference may be made to US 2023/050581, wherein an atomic object confined in a particular region of an atomic object confinement apparatus is cooled using an S-to-P-to-D EIT cooling operation.
Reference may be made to EP3843018 wherein, a controller of a quantum system identifies a phase update trigger for a quantum object of the quantum system and an interaction time. Reference may be made to US 2021/398008 wherein quantum file pattern searching is disclosed.

### BRIEF SUMMARY OF EXAMPLE EMBODIMENTS

Example embodiments provide quantum computers, systems (e.g., quantum systems), apparatuses, and/or the like and corresponding methods for performing conditional cooling of quantum objects confined by a quantum object confinement apparatus. In various embodiments, the heating values are assigned to a plurality of defined transportation operations. Heat accumulators associated with respective quantum objects are updated and/or iterated based on the assigned heating values when transportation operations are performed on respective quantum objects. When it is determined that a cooling operation is to be performed, the heat accumulator values (e.g., the respective values indicated by the respective heat accumulators) associated with the quantum objects disposed in selected zones of the confinement apparatus are identified. Based at least in part on the heat accumulator values, one or more cooling operation parameters are determined. Cooling operations are then performed in the selected zones of the confinement apparatus in accordance with the cooling operation parameters. For example, in an example embodiment, the one or more cooling operation parameters include a cooling time (e.g., a length of time for which a cooling operation is performed) and performing a cooling operation in accordance with such a cooling parameter includes performing the cooling operation for the cooling time. After and/or during performance of the cooling operations in the selected zones of the confinement apparatus, the heat accumulators associated with the quantum objects disposed in the selected zones are reset (e.g., set back to a defined base value, initialization value, or zero value).

A method for performing a conditional cooling operation is defined by claim 1. Specific embodiments are defined by the dependent claims.

In an example embodiment, the method further includes causing, by the controller, a transport operation to be performed on a first quantum object of plurality of quantum objects; and updating, by the controller, a respective heat accumulator associated with the first quantum object by a heat value corresponding to the transport operation.

In an example embodiment, the heat value corresponding to the transport operation is determined based at least in part on an operation identifier corresponding to the transport operation or a type of the transport operation.

In an example embodiment, the type of the transport operation is one of a shift, combine, swap, split, or junction traversal.

In an example embodiment, the type of transport operation is a combine transport operation and updating the respective heat accumulator associated with the first quantum object by the heat value corresponding to the transport operation comprises (a) adding a heat value corresponding to the combine transport operation to the respective heat accumulator to determine a respective pre-heat equalization value and (b) updating the respective heat accumulator value to be equal to an average of the respective pre-heat equalization value and a pre-heat equalization value corresponding to a second quantum object that was transported into proximity of the first quantum object via the combine transport operation.

In an example embodiment, a plurality of types of transport operations are defined and each type of transport operation of the plurality of types of transport operations is assigned a respective heat value.

In an example embodiment, a plurality of waveforms is defined and each waveform of the plurality of waveforms is configured to perform a respective transport operation and is indexed by a respective operation identifier.

In an example embodiment, the respective heat value assigned to the type of transport operation or associated with the operation identifier is determined via a calibration process.

In an example embodiment, when a combine transport operation is performed such that two or more quantum objects are transported into proximity to one another (e.g., into the same potential well) a secondary calculation is performed to account for the heat equalization that physically occurs where each of the two or more quantum objects' heat accumulator value is set to the average of the two or more quantum objects' heat accumulator values. For example, the heat accumulator values of two quantum objects resulting from the heat accumulator values being updated based on performance of a combine transport operation on the two or more quantum objects are equal to one another.

In an example embodiment, the type of transport operation is a combine transport operation and updating the respective heat accumulator associated with the first quantum object by the heat value corresponding to the transport operation comprises (a) adding a heat value corresponding to the combine transport operation to the respective heat accumulator to determine a respective pre-heat equalization value and (b) updating the respective heat accumulator value to be equal to an average of the respective pre-heat equalization value and a pre-heat equalization value corresponding to a second quantum object that was transported into proximity of the first quantum object via the combine transport operation.

In an example embodiment, the method further includes after or during causing performance of the cooling operation, resetting the respective heat accumulators associated with the one or more quantum objects that are disposed in the one or more selected zones.

In an example embodiment, the method further includes, after causing performance of the cooling operation, causing performance of a post-cooling operation in at least one of the selected zones.

In an example embodiment, the post-cooling operation is a two-qubit gate.

In an example embodiment, for each quantum object of the plurality of quantum objects, the respective heat accumulators comprise a respective heat accumulator associated with the quantum object.

In an example embodiment, for each quantum object of the plurality of quantum objects, the respective heat accumulators comprise one or more mode-specific heat accumulators each associated with a corresponding motional mode of the quantum object.

In an example embodiment, the representative value is the maximum heat accumulator value of the respective heat accumulators associated with the one or more quantum objects that are disposed in the one or more selected zones.

In an example embodiment, the cooling operation parameter is determined based at least in part on a function that receives the representative value as input.

In an example embodiment, the cooling operation parameter is determined based at least in part on identifying at least one threshold requirement that is satisfied by the representative parameter.

In an example embodiment, the cooling operation parameter is determined based at least in part on comparing the representative value to one or more thresholds.

In an example embodiment, the cooling operation parameter is a cooling time, and the cooling operation is performed for the cooling time.

In an example embodiment, the respective heat accumulators are stored as part of respective qubit records that comprise location information for the associated quantum object.

A controller configured to control operation of one or more components of a quantum system is defined by claim 14.

In an example embodiment, the computer-executable instructions are further configured to, when executed by the at least one processor, cause the controller to at least perform causing a transport operation to be performed on a first quantum object of plurality of quantum objects; and updating a respective heat accumulator associated with the first quantum object by a heat value corresponding to the transport operation.

In an example embodiment, the heat value corresponding to the transport operation is determined based at least in part on an operation identifier corresponding to the transport operation or a type of the transport operation.

In an example embodiment, the type of the transport operation is one of a shift, combine, swap, split, or junction traversal.

In an example embodiment, the type of transport operation is a combine transport operation and updating the respective heat accumulator associated with the first quantum object by the heat value corresponding to the transport operation comprises (a) adding a heat value corresponding to the combine transport operation to the respective heat accumulator to determine a respective pre-heat equalization value and (b) updating the respective heat accumulator value to be equal to an average of the respective pre-heat equalization value and a pre-heat equalization value corresponding to a second quantum object that was transported into proximity of the first quantum object via the combine transport operation.

In an example embodiment, a plurality of types of transport operations are defined and each type of transport operation of the plurality of types of transport operations is assigned a respective heat value.

In an example embodiment, a plurality of waveforms is defined and each waveform of the plurality of waveforms is configured to perform a respective transport operation and is indexed by a respective operation identifier.

In an example embodiment, the respective heat value assigned to the type of transport operation or associated with the operation identifier is determined via a calibration process.

In an example embodiment, the computer-executable instructions are further configured to, when executed by the at least one processor, cause the controller to at least perform, after or during causing performance of the cooling operation, resetting the respective heat accumulators associated with the one or more quantum objects that are disposed in the one or more selected zones.

In an example embodiment, the computer-executable instructions are further configured to, when executed by the at least one processor, cause the controller to at least perform, after causing performance of the cooling operation, causing performance of a post-cooling operation in at least one of the selected zones.

In an example embodiment, the post-cooling operation is a two-qubit gate.

In an example embodiment, for each quantum object of the plurality of quantum objects, the respective heat accumulators comprise a respective heat accumulator associated with the quantum object.

In an example embodiment, for each quantum object of the plurality of quantum objects, the respective heat accumulators comprise one or more mode-specific heat accumulators each associated with a corresponding motional mode of the quantum object.

In an example embodiment, the representative value is the maximum heat accumulator value of the respective heat accumulators associated with the one or more quantum objects that are disposed in the one or more selected zones.

In an example embodiment, the cooling operation parameter is determined based at least in part on a function that receives the representative value as input.

In an example embodiment, the cooling operation parameter is determined based at least in part on identifying at least one threshold requirement that is satisfied by the representative parameter.

In an example embodiment, the cooling operation parameter is determined based at least in part on comparing the representative value to one or more thresholds.

In an example embodiment, the cooling operation parameter is a cooling time, and the cooling operation is performed for the cooling time.

In an example embodiment, the respective heat accumulators are stored as part of respective qubit records that comprise location information for the associated quantum object.

A quantum system is defined by claim 15.

In an example embodiment, the computer-executable instructions are further configured to, when executed by the at least one processor, cause the controller to control one or more components of the quantum system to cause the quantum system to perform causing a transport operation to be performed on a first quantum object of plurality of quantum objects; and updating a respective heat accumulator associated with the first quantum object by a heat value corresponding to the transport operation.

In an example embodiment, the heat value corresponding to the transport operation is determined based at least in part on an operation identifier corresponding to the transport operation or a type of the transport operation.

In an example embodiment, the type of the transport operation is one of a shift, combine, swap, split, or junction traversal.

In an example embodiment, the type of transport operation is a combine transport operation and updating the respective heat accumulator associated with the first quantum object by the heat value corresponding to the transport operation comprises (a) adding a heat value corresponding to the combine transport operation to the respective heat accumulator to determine a respective pre-heat equalization value and (b) updating the respective heat accumulator value to be equal to an average of the respective pre-heat equalization value and a pre-heat equalization value corresponding to a second quantum object that was transported into proximity of the first quantum object via the combine transport operation.

In an example embodiment, a plurality of types of transport operations are defined and each type of transport operation of the plurality of types of transport operations is assigned a respective heat value.

In an example embodiment, a plurality of waveforms is defined and each waveform of the plurality of waveforms is configured to perform a respective transport operation and is indexed by a respective operation identifier.

In an example embodiment, the respective heat value assigned to the type of transport operation or associated with the operation identifier is determined via a calibration process.

In an example embodiment, the computer-executable instructions are further configured to, when executed by the at least one processor, cause the controller to control one or more components of the quantum system to cause the quantum system to perform, after or during causing performance of the cooling operation, resetting the respective heat accumulators associated with the one or more quantum objects that are disposed in the one or more selected zones.

In an example embodiment, the computer-executable instructions are further configured to, when executed by the at least one processor, cause the controller to control one or more components of the quantum system to cause the quantum system to perform, after causing performance of the cooling operation, performing a post-cooling operation in at least one of the selected zones.

In an example embodiment, the post-cooling operation is a two-qubit gate.

In an example embodiment, for each quantum object of the plurality of quantum objects, the respective heat accumulators comprise a respective heat accumulator associated with the quantum object.

In an example embodiment, for each quantum object of the plurality of quantum objects, the respective heat accumulators comprise one or more mode-specific heat accumulators each associated with a corresponding motional mode of the quantum object.

In an example embodiment, the representative value is the maximum heat accumulator value of the respective heat accumulators associated with the one or more quantum objects that are disposed in the one or more selected zones.

In an example embodiment, the cooling operation parameter is determined based at least in part on a function that receives the representative value as input.

In an example embodiment, the cooling operation parameter is determined based at least in part on identifying at least one threshold requirement that is satisfied by the representative parameter.

In an example embodiment, the cooling operation parameter is determined based at least in part on comparing the representative value to one or more thresholds.

In an example embodiment, the cooling operation parameter is a cooling time, and the cooling operation is performed for the cooling time.

In an example embodiment, the respective heat accumulators are stored as part of respective qubit records that comprise location information for the associated quantum object.

According to still another aspect, a computer program product is provided. In an example embodiment, the computer program product includes at least one non-transitory computer-readable storage medium storing executable instructions. The executable instructions are configured to, when executed by a processing element of a controller configured to control operation of one or more components of a quantum system, are configured to cause the controller to perform identifying one or more quantum objects of a plurality of quantum objects confined by a confinement apparatus of the quantum system that are disposed in one or more selected zones of the confinement apparatus. The plurality of quantum objects are associated with respective heat accumulators stored by a classical memory accessible to the controller. The executable instructions are further configured to, when executed by the processing element of the controller, are configured to cause the controller to perform determining a representative value based on heat accumulator values of the respective heat accumulators associated with the one or more quantum objects that are disposed in the one or more selected zones; determining a cooling operation parameter based at least in part on the representative value; and causing performance of a cooling operation in the one or more selected zones of the confinement apparatus in accordance with the cooling operation parameter.

In an example embodiment, the executable instructions are further configured to, when executed by the processing element of the controller, are configured to cause the controller to perform causing a transport operation to be performed on a first quantum object of plurality of quantum objects; and updating a respective heat accumulator associated with the first quantum object by a heat value corresponding to the transport operation.

In an example embodiment, the heat value corresponding to the transport operation is determined based at least in part on an operation identifier corresponding to the transport operation or a type of the transport operation.

In an example embodiment, the type of the transport operation is one of a shift, combine, swap, split, or junction traversal.

In an example embodiment, the type of transport operation is a combine transport operation and updating the respective heat accumulator associated with the first quantum object by the heat value corresponding to the transport operation comprises (a) adding a heat value corresponding to the combine transport operation to the respective heat accumulator to determine a respective pre-heat equalization value and (b) updating the respective heat accumulator value to be equal to an average of the respective pre-heat equalization value and a pre-heat equalization value corresponding to a second quantum object that was transported into proximity of the first quantum object via the combine transport operation.

In an example embodiment, a plurality of types of transport operations are defined and each type of transport operation of the plurality of types of transport operations is assigned a respective heat value.

In an example embodiment, a plurality of waveforms is defined and each waveform of the plurality of waveforms is configured to perform a respective transport operation and is indexed by a respective operation identifier.

In an example embodiment, the respective heat value assigned to the type of transport operation or associated with the operation identifier is determined via a calibration process.

In an example embodiment, the executable instructions are further configured to, when executed by the processing element of the controller, are configured to cause the controller to perform, after or during causing performance of the cooling operation, resetting the respective heat accumulators associated with the one or more quantum objects that are disposed in the one or more selected zones.

In an example embodiment, the executable instructions are further configured to, when executed by the processing element of the controller, are configured to cause the controller to perform, after causing performance of the cooling operation, causing performance of a post-cooling operation in at least one of the selected zones.

In an example embodiment, the post-cooling operation is a two-qubit gate.

In an example embodiment, for each quantum object of the plurality of quantum objects, the respective heat accumulators comprise a respective heat accumulator associated with the quantum object.

In an example embodiment, for each quantum object of the plurality of quantum objects, the respective heat accumulators comprise one or more mode-specific heat accumulators each associated with a corresponding motional mode of the quantum object.

In an example embodiment, the representative value is the maximum heat accumulator value of the respective heat accumulators associated with the one or more quantum objects that are disposed in the one or more selected zones.

In an example embodiment, the cooling operation parameter is determined based at least in part on a function that receives the representative value as input.

In an example embodiment, the cooling operation parameter is determined based at least in part on identifying at least one threshold requirement that is satisfied by the representative parameter.

In an example embodiment, the cooling operation parameter is determined based at least in part on comparing the representative value to one or more thresholds.

In an example embodiment, the cooling operation parameter is a cooling time, and the cooling operation is performed for the cooling time.

In an example embodiment, the respective heat accumulators are stored as part of respective qubit records that comprise location information for the associated quantum object.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
Figure 1 provides block diagram of an example QCCD-based quantum computer, in accordance with an example embodiment.
Figure 2 provides a block diagram illustrating an example transport operation being performed on a quantum object in a portion of a quantum object confinement apparatus, in accordance with an example embodiment.
Figures 3A, 3B, 3C, and 3D each provide a snapshot of an example sequence of transport operations performed on two quantum objects in a portion of a quantum object confinement apparatus, in accordance with an example embodiment.
Figure 4 provides a flowchart illustrating various processes, procedures, and/or operations of performing a conditional cooling operation, in accordance with an example embodiment.
Figure 5 provides an example lookup table of heat values and illustrates the evolution of heat accumulator values for two quantum objects undergoing the sequence of transport operations illustrated in Figures 3A, 3B, 3C, and 3D, in accordance with an example embodiment.
Figure 6 provides a flowchart illustrating various processes, procedures, and/or operations of assigning a heat value to a transport operation, in accordance with an example embodiment.
Figure 7 provides a schematic diagram of an example controller of a quantum computer comprising a quantum object confinement apparatus configured for confining quantum objects therein, in accordance with an example embodiment.
Figure 8 provides a schematic diagram of an example computing entity of a quantum computer system that may be used in accordance with an example embodiment.

### DETAILED DESCRIPTION OF SOME EXAMPLE EMBODIMENTS

The present invention now will be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. The term "or" (also denoted "/") is used herein in both the alternative and conjunctive sense, unless otherwise indicated. The terms "illustrative" and "exemplary" are used to be examples with no indication of quality level. The terms "generally" and "approximately" refer to within applicable engineering and/or manufacturing tolerances and/or within user measurement capabilities, unless otherwise indicated. Like numbers refer to like elements throughout.

In various scenarios, quantum objects are confined by a quantum object confinement apparatus (also referred to as a confinement apparatus herein). In various embodiments, the confinement apparatus is an ion trap, such as a surface ion trap, Paul ion trap, and/or the like. In various embodiments, the quantum objects are neutral or ionic atoms; neutral, ionic, or multipolar molecules, and/or other quantum objects that can be transported between different positions defined by the confinement apparatus. In various embodiments, each quantum object is accompanied by a coolant object. In an example embodiment, the coolant object is an ion or other object that is confineable by the confinement apparatus and that can be used to perform sympathetic cooling of the quantum object. In various embodiments, an object crystal is formed by one or more quantum objects and their respective accompanying coolant objects.

In various embodiments, the quantum objects confined by the confinement apparatus are used to perform experiments, controlled quantum state evolution, quantum computations, and/or the like. For example, the quantum objects are used as the qubits of a QCCD-based quantum computer, in an example embodiment. In various embodiments, in order for the quantum objects confined by the confinement apparatus to be used to perform the experiments, controlled quantum state evolution, quantum computations, and/or the like, the quantum objects need to be at a low temperature and/or cooled near the motional ground state for the quantum object (or an object crystal that includes the quantum object). For example, the motional states of the quantum objects and/or object crystals need to be de-excited or cooled so that the quantum objects are in their motional ground state such that the quantum objects can be used to perform experiments, controlled quantum state evolution, quantum computations, and/or the like.

In various scenarios, during the performance of experiments, controlled quantum state evolution, quantum computations, and/or the like, various transport operations are performed on the quantum objects and/or object crystals within the confinement apparatus. During performance of such transportation operations, the quantum objects and/or object crystals become excited and/or heated such that the quantum objects and/or object crystals are no longer in their motional ground state. Cooling operations are then used to reduce the motional energy of the quantum object and/or object crystal. For example, laser cooling may be used to sympathetically cool the quantum object through the use of the accompanying coolant object.

Laser cooling is a slow process compared to various other processes executed during the performance of experiments, controlled quantum state evolution, quantum computations, and/or the like. For example, the time required to perform transportation and cooling operations is conventionally considered a limiting factor in the computational speed of QCCD quantum computers. Moreover, the significant fraction of quantum circuit run time required to cool quantum objects and/or object crystals after performance of a transportation operation can contribute to memory error. Thus, technical problems exist as to how to quickly and efficiently cool and/or reduce the motional energy of a quantum object and/or object crystal.

Conventionally, cooling operations, such as laser cooling, are performed assuming a baseline scenario for a quantum object. For example, the cooling operation is performed in accordance with parameters determined by calibrating the operations as a function of the quantum computer performance. Such parameters are configured to provide sufficient cooling regardless of the heat state of the quantum object to be cooled. For example, each cooling operation performed is performed using the same cooling operation parameters. However, in various scenarios, performing cooling operations based on worst case scenario cooling operation parameters results in over cooling of the quantum objects and/or object crystals. For example, a cooling time determined based on a worst-case scenario may be longer than necessary for cooling a particular quantum object. In another example, power of a cooling laser determined based on a worst-case scenario may be larger than necessary for cooling a particular quantum object.

In various embodiments, the heat accumulated by respective quantum objects and/or object crystals is tracked. Cooling operation parameters are then determined based on the heat accumulated by the quantum objects and/or object crystals to be cooled. Cooling operations are performed in accordance with the cooling operation parameters determined based on the heat accumulated by the quantum objects and/or object crystals to be cooled. This conditional cooling of the quantum objects and/or object crystals enables the cooling operations to be tailored to the heat accumulated by the quantum objects and/or object crystals to be cooled, rather than to tailored to a hypothetical worst-case scenario. This enables appropriate reductions in, for example, the cooling time, applied laser power, and/or the like. Therefore, various embodiments provide technical improvements to the fields of quantum system control and quantum computing by reducing the fraction of run time of a quantum circuit that is spent performing cooling operations, enabling the reduction in power consumption of a quantum system such as a QCCD-based quantum computer, and/or the like. These improvements and/or technical advantages are realized through the determination of cooling operation parameters based on the heat accumulated by the quantum objects and/or object crystals to be cooled via a particular instance of (simultaneous) cooling operations.

### Exemplary Quantum Computer System

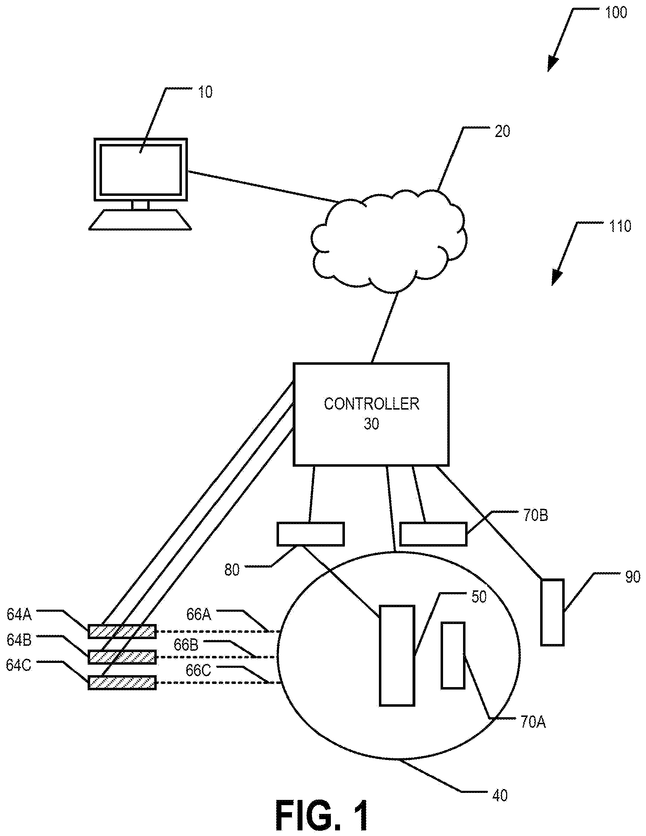

Conditional cooling of quantum objects and/or object crystals confined by a confinement apparatus may be performed in a wide variety of contexts and/or for a wide variety of applications. One example context is quantum charge-coupled device (QCCD)-based quantum computing. Figure 1 provides a block diagram of an example quantum computer system 100. In various embodiments, the quantum computer system 100 comprises a computing entity 10 and a quantum computer 110.

In various embodiments, the quantum computer 110 comprises a controller 30, a cryogenic and/or vacuum chamber 40 enclosing a confinement apparatus 50 having quantum objects and/or object crystals confined thereby, and one or more manipulation sources 64 (e.g., 64A, 64B, 64C). In an example embodiment, the one or more manipulation sources 64 may comprise one or more lasers (e.g., optical lasers, microwave sources and/or masers, and/or the like) or another manipulation source. In various embodiments, the one or more manipulation sources 64 are configured to manipulate and/or cause a controlled quantum state evolution of one or more quantum objects within the apparatus 50. For example, a first manipulation source 64A is configured to generate and/or provide a first manipulation signal and a second manipulation source 64B is configured to generate and/or provide a second manipulation signal, wherein the first and second manipulation signals are configured to collectively laser cool quantum objects and/or object crystals confined by the confinement apparatus 50, perform quantum logic gate on one or more quantum objects, perform a reading operation on one or more quantum objects, and/or the like.

In various embodiments, the quantum objects are neutral or ionic atoms; neutral, ionic, or multipolar molecules, and/or other quantum objects that can be transported between different positions defined by the confinement apparatus. In various embodiments, the quantum object confinement apparatus 50 is an ion trap, such as a surface ion trap, Paul ion trap, and/or the like. In an example embodiment, the confinement apparatus 50 is an optical trap and/or other apparatus configured to confine quantum objects.

In various embodiments, each quantum object is accompanied by a coolant object. In an example embodiment, the coolant object is an ion or other object that is confineable by the confinement apparatus and that can be used to perform sympathetic cooling of the quantum object. In various embodiments, an object crystal is formed by one or more quantum objects and their respective accompanying coolant objects. In various embodiments, the coolant objects are chemically distinct from the quantum objects (e.g., ions of two different chemical species/elements, and/or the like) such that the energy structures of the coolant objects are different from those of the quantum objects.

In an example embodiment, the one or more manipulation sources 64 each provide a manipulation signal (e.g., laser beam and/or the like) to one or more regions of the quantum object confinement apparatus 50 via corresponding beam paths 66 (e.g., 66A, 66B, 66C). In various embodiments, at least one beam path 66 comprises a modulator configured to modulate the manipulation signal being provided to the apparatus 50 via the beam path 66. In various embodiments, the manipulation sources 64, modulator, and/or other components of the quantum computer 110 are controlled by the controller 30.

In various embodiments, the quantum computer 110 comprises one or more magnetic field generators 70 (e.g., 70A, 70B). For example, the magnetic field generator may be an internal magnetic field generator 70A disposed within the cryogenic and/or vacuum chamber 40 and/or an external magnetic field generator 70B disposed outside of the cryogenic and/or vacuum chamber 40. In various embodiments, the magnetic field generators 70 are permanent magnets, Helmholtz coils, electrical magnets, and/or the like. In various embodiments, the magnetic field generators 70 are configured to generate a magnetic field at one or more regions of the confinement apparatus 50 that has a particular magnitude and a particular magnetic field direction in the one or more regions of the confinement apparatus 50.

In various embodiments, the quantum computer 110 comprises voltages sources 80 configured to provide electrical signals to electrodes of the electrode array of the confinement apparatus 50 and/or to radio frequency (RF) rails and/or electrodes of the quantum object confinement apparatus. For example, the voltages sources 80 may comprise arbitrary wave generators (AWGs), digital/analog converters (DACs), and/or the like configured to generate and provide various electrical signals. The voltage sources 80 are electrically coupled to the corresponding potential generating elements (e.g., electrodes of the electrode array, RF rails) of the confinement apparatus 50, in an example embodiment. For example, the voltage sources 80 are configured to provide periodic voltage signals to the RF rails and/or voltage signals in accordance with one or more transport operation waveforms to the electrodes of the electrode array of the confinement apparatus to cause the quantum objects and/or object crystals to be confined and/or to cause the performance of various transport operations on respective quantum objects and/or object crystals. In various embodiments, the voltages sources 80 are controlled by respective driver controller elements of the controller 30.

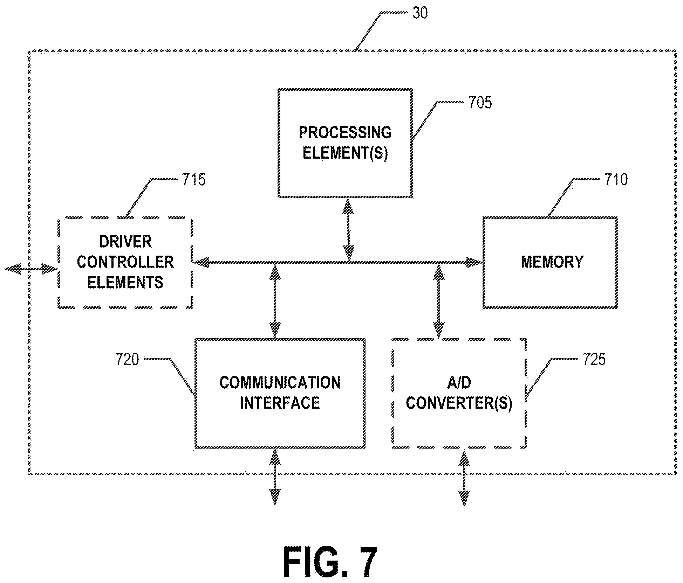

In various embodiments, the quantum computer 110 comprises an optics collection system 90 configured to collect and/or detect photons generated and/or scattered by quantum objects confined by the confinement apparatus 50. The optics collection system 90 may comprise one or more optical elements (e.g., lenses, mirrors, waveguides, fiber optics cables, and/or the like) and one or more photodetectors. In various embodiments, the photodetectors may be photodiodes, photomultipliers, charge-coupled device (CCD) sensors, complementary metal oxide semiconductor (CMOS) sensors, Micro-Electro-Mechanical Systems (MEMS) sensors, and/or other photodetectors that are sensitive to light and/or the frequency of light emitted by quantum objects of the quantum computer 110 during a reading operation. In various embodiments, the detectors may be in electronic communication with the quantum system controller 30 via one or more A/D converters 725 (see Figure 7) and/or the like.

In various embodiments, the controller 30 is configured to control voltage sources 80, electrical signal sources, and/or drivers controlling the confinement apparatus 50 and/or transport of quantum objects and/or object crystals within the confinement apparatus 50, a cryogenic system and/or vacuum system controlling the temperature and pressure within the cryogenic and/or vacuum chamber 40, manipulation sources 64, magnetic field generators 70, and/or other systems controlling the environmental conditions (e.g., temperature, humidity, pressure, and/or the like) within the cryogenic and/or vacuum chamber 40 and/or configured to manipulate and/or cause a controlled evolution of quantum states of one or more quantum objects confined by the confinement apparatus 50.

In various embodiments, a computing entity 10 is configured to allow a user to provide input to the quantum computer 110 (e.g., via a user interface of the computing entity 10) and receive, view, and/or the like output from the quantum computer 110. The computing entity 10 may be in communication with the controller 30 of the quantum computer 110 via one or more wired or wireless networks 20 and/or via direct wired and/or wireless communications. In an example embodiment, the computing entity 10 may translate, configure, format, and/or the like information/data, quantum computing algorithms, quantum circuits, and/or the like into a computing language, executable instructions, command sets, and/or the like that the controller 30 can understand and/or implement.

### Exemplary Confinement Apparatus

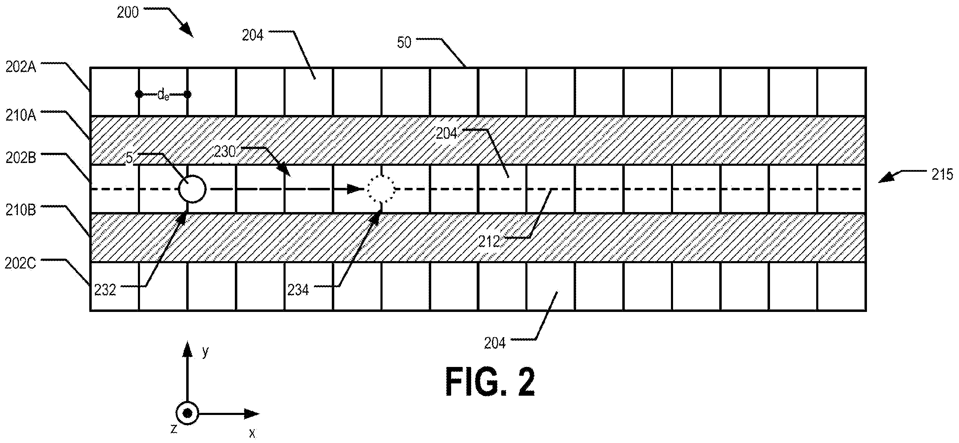

Figure 2 illustrates a portion 200 of an example confinement apparatus 50 of an example QCCD-based quantum computer system 100. A quantum object 5 is confined in the illustrated portion 200 of the illustrated confinement apparatus 50.

In various embodiments, the confinement apparatus 50 may be a confinement apparatus as described by U.S. Patent Application No. 17/810,082, filed June 30, 2022, U.S. Patent Application No. 17/533,587, filed November 23, 2021, and/or U.S. Patent No. 11,037,776, issued June 15, 2021.

Figure 2 provides a top schematic view of a portion 200 of an example confinement apparatus 50. The example confinement apparatus 50 may be a one-dimensional confinement apparatus, a two-dimensional confinement apparatus, a three-dimensional confinement apparatus, a confinement apparatus that comprises a two or three-dimensional (possibly periodic) array of one-dimensional trapping segments, and/or the like. In an example embodiment, the confinement apparatus 50 is a multi-dimensional (e.g., two or three-dimensional) surface ion trap, surface Paul trap, and/or the like. In various embodiments, the confinement apparatus is configured to trap and/or confine a plurality of quantum objects and/or object crystals.

In an example embodiment, the confinement apparatus 50 is fabricated as part of a confinement apparatus chip and/or part of a confinement apparatus package. For example, the confinement apparatus 50 may be formed on a chip that comprises a plurality of leads and/or wiring attachment points such that a plurality of voltage signals (e.g., periodic voltage signals, waveform voltages signals) may be provided and/or applied to the RF rails 210 and the electrodes 204 of the array of electrodes, respectively.

In an example embodiment, the confinement apparatus 50 is at least partially defined by a number of radio frequency (RF) rails 210 (e.g., 210A, 210B). In various embodiments, the quantum object confinement apparatus 50 is at least partially defined by a number of sequences of electrodes 202 (e.g., 202A, 202B, 202C). For example, the sequences of electrodes 202 form an array of electrodes 204. In various embodiments, a variety of electrode 204 geometries, placements, layouts, and/or the like may be used. The illustrated electrode 204 geometry, placement, layout, and/or the like is provided for illustrative purposes and, in various embodiments, will be determined and/or configured based on the intended application of the confinement apparatus 50. In various embodiments, the upper surface of the confinement apparatus 50 has a planarized topology. For example, the upper surface of each RF rail 210 of the number of RF rails and the upper surface of each electrode 204 of the number of sequences of electrodes 202 may be substantially coplanar. In an example embodiment, the surface of the confinement apparatus 50 is not planar and a plane is defined (e.g., based on a surface of the RF rails 210 and/or one or more electrodes 204) from which the height of the quantum objects above the "surface" of the quantum object confinement apparatus 50 is measured.

In various embodiments, two adjacent and/or substantially parallel RF rails 210 may be separated (e.g., insulated) from one another by a longitudinal gap 215. For example, the longitudinal gap 215 may define (in one or two dimensions) the confinement channel or region of the quantum object confinement apparatus 50 in which one or more quantum objects and/or object crystals may be confined and/or trapped at various locations within the quantum object confinement apparatus 50. In various embodiments, the longitudinal gap 215 defined thereby may extend substantially parallel to the adjacent RF rails 210 along the length of a corresponding portion and/or leg. In an example embodiment, the longitudinal gap 215 may be at least partially filled with an insulating material (e.g., a dielectric material). In various embodiments, the dielectric material may be silicon dioxide (e.g., formed through thermal oxidation) and/or other dielectric and/or insulating material. In various embodiments, the longitudinal gap has a width (e.g., distance between adjacent RF rails 210) of approximately 40 µm to 500 µm. In various embodiments, one or more sequences of electrodes 202B is disposed and/or formed within the longitudinal gap 215.

In various embodiments, the confinement apparatus 50 (and/or legs and/or junctions thereof) may be at least partially defined by a number of sequences of electrodes 202 each comprising a plurality of electrodes 204. In an example embodiment, each sequence of electrodes 202 that is associated with and/or at least partially defines a leg is formed to extend substantially parallel to the one or more the RF rails 210 that at least partially define the respective leg along at least a portion of the length of the leg. For example, the three sequences of electrodes 202A, 202B, 202C at least partially define the portion 200 of the quantum object confinement apparatus 50 illustrated in Figure 2. Each of the three sequences of electrodes 202 comprise a plurality of electrodes 204. In various embodiments, the number of sequences of electrodes 202 that at least partially define each leg comprises two, three, four, and/or another number of sequences of electrodes. In an example embodiment, the quantum object confinement apparatus 50 comprises a plurality of number of sequences of electrodes 202, with each number of sequences of electrodes at least partially defining a leg and/or a junction of the quantum object confinement apparatus 50. In some embodiments, each of the electrodes 204 are formed with substantially coplanar upper surfaces that are substantially coplanar with the upper surfaces of the RF rails 210.

In an example embodiment, a transverse gap may exist between neighboring and/or adjacent electrodes 204. In an example embodiment, the transverse gap may be empty space and/or at least partially filled with a dielectric material to prevent electrical communication between neighboring and/or adjacent electrodes 204. In an example embodiment, the transverse gap between neighboring and/or adjacent electrodes 204 may be in the range of approximately 1 - 10 µm.

In an example embodiment, a longitudinal gap exists between a sequence of electrodes 202 and a neighboring and/or adjacent RF rail 210. In an example embodiment, the longitudinal gap may be at least partially filled with a dielectric and/or insulating material to prevent electrical communication between electrodes 204 of the sequence of electrodes 202 and the RF rail 210. In an example embodiment, the longitudinal gap between electrodes 204 and a neighboring and/or adjacent RF rail 210 may be in the range of approximately 1 - 10 µm.

In an example embodiment a number (e.g., pair) of RF rails 210 may be formed between a first sequence of electrodes 202A and a third sequence of electrodes 202C with a second sequence of electrodes 202B extending along the longitudinal channel between the RF rails 210. For example, each sequence of electrodes 202 of a particular leg may extend in a direction substantially parallel to the corresponding RF rails 210 along at least a portion of the length of the particular leg. In various embodiments, the upper surfaces of the electrodes 204 are substantially coplanar with the upper surfaces of the RF rails 210.

In various embodiments, periodic voltage signals (e.g., voltage signals having a radio frequency periodicity) may be applied to the RF rails 210 to generate an electric and/or magnetic field that acts to maintain a quantum object and/or object crystal confined and/or trapped by the confinement apparatus 50. For example, the RF rails 210 that at least in part define a particular leg generate an electric pseudopotential that confines and/or traps quantum objects and/or object crystals within the particular leg in directions transverse to the corresponding one-dimensional segment and/or portion of the confinement apparatus 50. For example, the RF rails 210 are configured to, when a periodic voltage signal is applied thereto, generate a pseudopotential that confines and/or traps quantum objects and/or object crystals along a one-dimensional segment illustrated by a dashed line 212 in Figure 2 that represents the local pseudopotential null. For example, the radio frequency null along a leg defines a transport path (e.g., transport path 230) along the leg along which quantum objects 5 and/or object crystals can be transported along at least a portion of the length of the leg.

In various embodiments, the electrodes 204 of the array of electrodes (e.g., formed by the number of sequences of electrodes 202) are configured to have waveform voltage signals applied thereto such that the electrodes 204 generate a time-dependent electric potential field that causes respective quantum objects and/or object crystals to be transported along the transport path 230 (e.g., along the RF null) for the corresponding portion of the confinement apparatus 50. For example, the electrical and/or magnetic field generated at least in part by waveform voltage signals (e.g., generated by voltage sources 80) applied to the electrodes 204 may trap at least one quantum object and/or object crystal in a potential well above the upper surface of the second sequence of electrodes 202B and/or the longitudinal gap 215 of the respective leg and/or portion 200 of the quantum object confinement apparatus 50.

Additionally, the waveform voltage signals applied to the electrodes 204 may cause quantum objects and/or object crystals confined and/or trapped within the potential well above the upper surface of the second sequence of electrodes 204 and/or the longitudinal gap 215 to traverse trajectories and/or transport paths that substantially follow and/or are along the RF null for the corresponding and/or portion of the confinement apparatus. For example, the waveform voltage signals may be configured to cause one or more quantum objects and/or object crystals to experience one or more transport operations. Some example transport operations that can be performed include a shift (e.g., causing the quantum objects and/or object crystals to be transported along one or more one-dimensional confinement regions defined by the RF rails 210 and the respective sequences of electrodes 202), a combine (e.g., combining two or more quantum objects and/or object crystals into a single potential well), swap (e.g., swapping or switching the relative positions of two or more quantum objects and/or object crystals), split (e.g., splitting two or more quantum objects and/or object crystals initially in a single potential well into distinct potential wells), junction traversal (e.g., causing a quantum object and/or crystal traverse a junction) and/or the like. In various embodiments, there may be multiple forms of junction traversal transport operations that correspond to respective paths through a junction (e.g., entering from the right and exiting up, entering from the right and exiting down, entering from the right and exiting to the left, etc.). As should be understood, various transport operations may be defined in various embodiments, as appropriate for the application.

In various embodiments, the waveform voltage signals applied to the electrodes 204 and the periodic voltage signals applied to the RF rails 210 are controlled by one or more connected devices (e.g., a controller 30 as shown in Figure 7 and/or the like) via leads. For example, a controller 30 may control a voltage source 80 and/or other voltage driver to cause the voltage source 80 and/or driver to apply waveform voltage signals to the electrodes 204 to generate a time-dependent electric potential (e.g., an electric potential that evolves with time) that causes the respective quantum objects and/or object crystals trapped and/or confined by the confinement apparatus 50 to be transported along prescribed transport paths, experience respective transport operations, and/or held at prescribed positions.

### Example Performance of Conditional Cooling Operations

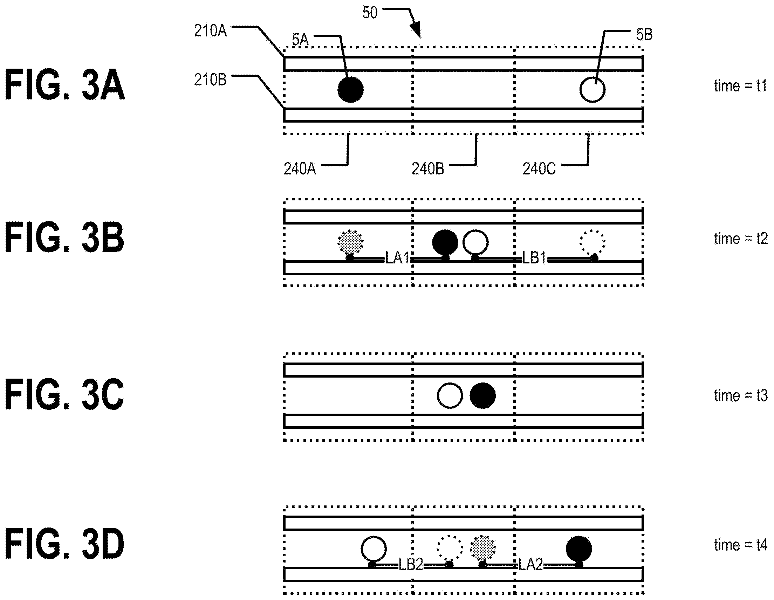

In various embodiments, the controller 30 controls one or more components of the quantum computer 110 to perform conditional cooling operations configured to reduce the motional energy of one or more quantum objects and/or object crystals confined by the confinement apparatus 50. In various embodiments, conditional cooling operations are performed in parallel in selected zones of the confinement apparatus 50. For example, in various embodiments, the confinement region(s) of the confinement apparatus 50 may be divided into a plurality of zones. In various embodiments, the zones are defined by geometries of the electrodes 204, alignment of one or more optical beam paths 66, and/or the like. For example, Figure 3A illustrates a portion of a confinement apparatus 50 corresponding to three zones 240A, 240B, and 240C. Conditional cooling operations may be performed in parallel (e.g., simultaneously and/or overlapping in time) in a plurality of selected zones. In various embodiments, conditional cooling operations may be performed in parallel (e.g., simultaneously and/or overlapping in time) in one or more selected zones with transportation operations being performed in one or more other zones (or possibly in the one or more selected zones). This may enable the time required to perform transportation operations and the time required to perform cooling operations to overlap such that the overall amount of time for which transportation and cooling operations is reduced.

In various embodiments, the controller 30 is configured to track the heat accumulated by various quantum objects and/or object crystals as a result of the performance of respective transport operations on the respective quantum objects. In an example embodiment, a plurality of types of transport operations are defined. Heating affects due to other types of operations may also be tracked, in various embodiments. For example, the controller 30 may be configured and/or programmed to cause the confinement apparatus 50 to perform a plurality of types of transport operations with respect to respective quantum objects and/or object crystals confined by the confinement apparatus.

In various embodiments, a transport operation is enacted by application of waveform voltage signals in correspondence with a specific waveform to electrodes of the confinement apparatus 50. In various embodiments, a waveform is a data object that indicates sequences of voltage signals (the waveform voltage signals) that, when applied to respective electrodes 204 of the confinement apparatus 50, cause a particular transport operation to be performed. The data object of the waveform includes and/or is linked to an operation identifier configured to identify the particular transport operation and/or the waveform.

For example, the controller 30 may store a plurality of waveforms that, when waveform voltage signals corresponding to the waveform are applied to respective electrodes 204, cause a corresponding transport operation to be performed on a first quantum object. In various embodiments, each waveform is associated with an operation identifier. For example, an operation identifier is configured to identify a particular waveform configured to cause performance of a particular transport operation. For example, each waveform stored by the controller 30 (e.g., in memory 710 of Figure 7) may be associated with a respective operation identifier. In various embodiments, the controller 30 (e.g., in memory 710) stores a respective heat value in association with the respective operation identifier.

In various embodiments, a transport operation is categorized as a type of transport operation. For example, in an example embodiment, the considered types of transportation operations include the categories of shift (also referred to as linear transport), combine, swap, split, and/or junction traversal. For example, the controller 30 may store a respective heat value associated with each type or category of transport operation. In various embodiments, a plurality of waveforms stored by the controller 30 may correspond to a respective category of transport operations. For example, the controller 30 may store a first plurality of waveforms configured to enact respective transport operations of the type of transport operation of shift or linear transport and may store a second plurality of waveforms configured to enact reactive transport operations of the type of transport operation of combine.

Figures 3A, 3B, 3C, and 3D illustrate some example types or categories of transport operations with respect to a first quantum object 5A and a second quantum object 5B. As should be understood, the first and second quantum objects 5A, 5B may be replaced with first and second object crystals, in various embodiments. Figure 3A illustrates the first and second quantum objects 5A, 5B at a first time t1 and Figure 3B illustrates the first and second quantum objects 5A, 5B at a second time t2 with t1 < t2. In the time between the first time t1 and the second time t2, respective shift transport operations are performed on the first and second quantum objects and a combine transport operation has been performed to bring the first and second quantum objects 5A, 5B into a single potential well. For example, at time t1, the first quantum object 5A is disposed in a first zone 240A and is confined within a first potential well. Between the first time t1 and the second time t2, the first potential well, and the first quantum object confined therein, is transported into a second zone 240B of the confinement apparatus 50 via a shift transport operation. At time t1, the second quantum object 5B is disposed in a third zone 240C and is confined within a second potential well. Between the first time t1 and the second time t2, the second potential well, and the second quantum object confined therein, is transported into the second zone 240B via a shift transport operation. A combine transport operation is then performed to merge the first and second potential wells such that the first quantum object 5A and the second quantum object 5B are disposed within a common potential well at the second time t2 disposed within the second zone 240B.

At the second time t2, the first quantum object 5A is located to the left of the second quantum object 5B, as illustrated. Figure 3C illustrates the first and second quantum objects 5A, 5B confined within the second zone 240B at a third time t3 with t2 < t3. Between the second time t2 and the third time t3, a swap transport operation is performed such that, at the third time t3, the first quantum object 5A is located to the right of the second quantum object 5B. For example, the swap transport operation causes the first quantum object 5A and the second quantum object 5B to swap and/or switch relative positions.

Figure 3D illustrates the first and second quantum objects 5A, 5B confined by the confinement apparatus at a fourth time t4 with t3 < t4. Between the third time t3 and the fourth time t4, a split transport operation is performed followed by respective linear transports. In various embodiments, a split transport operation is the opposite of a combine transport operation. In other words, at the third time t3, the first and second quantum objects 5A, 5B are disposed within a common potential well. The split transport operation causes the common potential well to be split into a first potential well confining the first quantum object 5A and a distinct second potential well confining the second quantum object 5B. The first potential well is then transported from the second zone 240B to the third zone 240C, carrying the first quantum object therewith to perform a shift transport operation. The second potential well is transported from the second zone 240B to the first zone 240A, carrying the second quantum object 5B therewith to perform another shift transport operation. As should be understood, the sequence of transport operations illustrated in Figures 3A, 3B, 3C, and 3D is provided as an illustrative example of some example types or categories of transport operations and is not intended to be limiting.

In various embodiments, performance of respective types of transport operations may cause different heating effects on the quantum object and/or object crystals on which the transport operations are performed. For example, a shift transport operation may have a different heating effect on a quantum object and/or object crystal than a split transport operation. In another example, application of waveform voltage signals (to respective electrodes) in accordance with a first waveform that causes performance of a transport operation of the shift transport operation category may have a different heating effect on a quantum object and/or object crystal than that caused by application of waveform voltage signals in accordance with a second waveform that causes a different transport operation of the shift transport operation category to be performed or application of waveform voltage signals in accordance with a third waveform that causes a transport operation of a different category of transport operation to be performed.

In various embodiments, each type of transport operation of the plurality of transport operations that are defined is assigned a respective heat value. The respective heat value is indicative of the heating experienced by a quantum object and/or object crystal as a result of a transport operation of a respective type of transport operation being performed on the quantum object and/or object crystal. In various embodiments, the controller 30 stores the respective heat values assigned to each type of transport operation. For example, the respective heat values may be stored in a database, lookup table, and/or the like.

In an example embodiment, the respective heat values correspond to an overall heating (e.g., heating of all motional modes) of the quantum object and/or object crystal as a result of the transport operation being performed thereon. In an example embodiment, each type of transport operation is assigned a plurality of respective heating values with each heating value corresponding to a single motional mode or a group of motional modes of the quantum object and/or object crystal. For example, an object crystal consisting of N (a positive integer) quantum objects, coolant objects, and/or a combination thereof, has N longitudinal modes corresponding to motion in a direction substantially parallel to the dashed line 212 (e.g., in the x-direction as illustrated in Figure 2) and 2N radial modes corresponding to motion in directions substantially perpendicular to the dashed line 212 (e.g., in the y and/or z-directions as illustrated in Figure 2). In an example embodiment, the respective heating values assigned to a respective type of transport operation include two respective heating values, with a first respective heating value indicating heating experienced by the longitudinal modes of the quantum object and/or object crystal and a second respective heating value indicating heating experienced by radial modes of the quantum object and/or object crystal as a result of the transport operation being performed thereon. In an example embodiment, the respective heating values assigned to a respective type of transport operation include three respective heating values, with a first respective heating value indicating heating experienced by the longitudinal modes of the quantum object and/or object crystal, a second respective heating value indicating heating experienced by radial modes of the quantum object and/or object crystal that are parallel to the plane of the confinement apparatus (e.g., in the y-direction as illustrated in Figure 2), and a third respective heating value indicating heating experienced by radial modes of the quantum object and/or object crystal that are orthogonal to the plane of the confinement apparatus (e.g., in the z-direction as illustrated in Figure 2) as a result of the transport operation being performed thereon. In an example embodiment, the respective heating values assigned to a respective type of transport operation include 3N respective heating values, with each respective heating value corresponding to a specific motional mode.

In various embodiments, as the controller 30 causes the quantum computer 110 to perform a quantum circuit and/or program, the controller 30 tracks the heat accumulated by each quantum object and/or object crystal. For example, the controller 30 stores (e.g., in a classical memory 710 thereof (see Figure 7)) a qubit record corresponding to each quantum object to be used as a qubit of the quantum computer 110 and/or object crystal including a quantum object to be used as a qubit of the quantum computer 110. The qubit record may store information regarding the location of the associated quantum object and/or object crystal within the confinement apparatus, a phase of the qubit, one or more respective heat accumulators associated with the quantum object and/or object crystal, and/or the like. For example, the qubit record for a particular quantum object and/or object crystal comprises a respective heat accumulator configured for use in tracking the heat accumulated by the quantum object and/or object crystal as a result of transport operations being performed on the quantum object and/or object crystal.

In various embodiments, each qubit record may include one or more heat accumulators. For example, in an example embodiment wherein a respective type of transport operation is assigned a heat value that corresponds to all motional modes, each quantum object and/or object crystal is associated with one heat accumulator. In various embodiments, a heat accumulator is associated with a particular motional mode or a group of motional modes of a respective quantum object and/or object crystal. For example, in an example embodiment, wherein a respective type of transport operation is assigned a longitudinal modes heat value and a radial modes heat value, each quantum object and/or object crystal may be associated with a longitudinal heat accumulator to track heat (e.g., motional energy) of the longitudinal motional modes and a radial heat accumulator to track heat (e.g., motional energy) of the radial motional modes. In an example embodiment, wherein a respective type of transport operation is assigned a longitudinal modes heat value, a first radial modes heat value (e.g., for radial modes parallel to the plane of the confinement apparatus), and a second radial modes heat value (e.g., for radial modes perpendicular to the plane of the confinement apparatus), each quantum object and/or object crystal may be associated with a longitudinal heat accumulator to track heat (e.g., motional energy) of the longitudinal motional modes, a first radial heat accumulator to track heat (e.g., motional energy) of the first radial motional modes (e.g., radial modes parallel to the plane of the confinement apparatus), and a second radial heat accumulator to track heat (e.g., motional energy) of the second radial motional modes (e.g., radial modes perpendicular to the plane of the confinement apparatus). In an example embodiment, wherein a respective type of transport operation is assigned a plurality (e.g., 3N, where N is the number of objects (quantum objects and coolant objects) of the object crystal) of motional mode specific heat values, each quantum object and/or object crystal may be associated with a plurality (e.g., 3N) mode-specific heat accumulators.

When a cooling operation is to be performed in selected zones of the confinement apparatus 50, the controller 30 identifies the quantum objects and/or object crystals that are disposed within the selected zones and determines the values of the respective heat accumulators associated therewith. Based on the values of the respective heat accumulators associated with the quantum objects and/or object crystals disposed within the selected zones, one or more cooling operation parameters are determined. Some non-limiting examples of cooling operation parameters for a laser cooling operation include cooling time (e.g., length of the time the cooling operation is performed for), laser power used to perform the cooling operation, detuning from resonance of the cooling operation, and/or the like. In an example embodiment, the one or more cooling operation parameters include the cooling time.

In an example embodiment, the one or more cooling operation parameters are determined based at least in part on a representative value that represents the determined values of the respective heat accumulators. In an example embodiment, the representative value is the maximum value of the determined values of the respective heat accumulators. In an example embodiment, the representative value is determined based on a statistical description of the determined values of the respective heat accumulators (e.g., average, standard deviation, etc.).

In various embodiments, the one or more cooling operation parameters are determined by evaluating a function that uses the representative value as input. In various embodiments, the one or more cooling operation parameters are determined by comparing the representative value to one or more thresholds.

In various embodiments where the heat accumulators correspond to a particular motional mode or a group of motional modes (e.g., longitudinal or radial motional modes; longitudinal, first radial, or second radial motional modes; and/or the like), motional mode or group of motional mode specific cooling operation parameters may be determined. For example, a cooling operation may include multiple portions that are each configured for cooling one or more particular motional modes and cooling operation parameters corresponding to one or more of the multiple portions of the cooling operation may be determined based on corresponding representative values of the heat accumulators. For example, a representative value for longitudinal mode associated heat accumulators may be determined and a representative value for radial mode associated accumulators may be determined. In another example, a representative value for each motional mode of the quantum object and/or object crystal may be determined based on the respective values determined for the heat accumulators associated with the respective motional mode.

The cooling operations are then performed in the selected zones of the confinement apparatus in accordance with the one or more cooling parameters. For example, if the one or more cooling parameters includes a cooling time, the cooling operations are performed in the selected zones for a length of time indicated by the cooling time. In various embodiments, cooling operations are performed in parallel, simultaneously, and/or overlapping in time in each of the selected zones of the confinement apparatus.

As a result of the cooling operations performed in the selected zones, the quantum objects and/or object crystals disposed within the selected zones are cooled to near their motional ground states. The heat accumulators associated with the quantum objects and/or object crystals disposed within the selected zones are reset during or after the performance of the cooling operations to indicate that the quantum objects and/or object crystals disposed in the selected zones have been cooled. For example, the heat accumulators associated with the quantum objects and/or object crystals disposed within the selected zones may be set back to a defined base value, initialization value, or zero value.

In various embodiments, after the cooling operations are performed, one or more post-cooling operations may be performed. For example, the one or more post-cooling operations may be any operations for which it is desired that the quantum objects and/or object crystals acted upon by the respective post-cooling operation be at or near its motional ground state. For example, the one or more post-cooling operations may include single qubit gates, two-qubit gates, qubit reading operations, and/or the like. After performance of the one or more post-cooling operations, various transport operations may be performed, and the respective heat accumulators may be updated based on the performed transport operations.

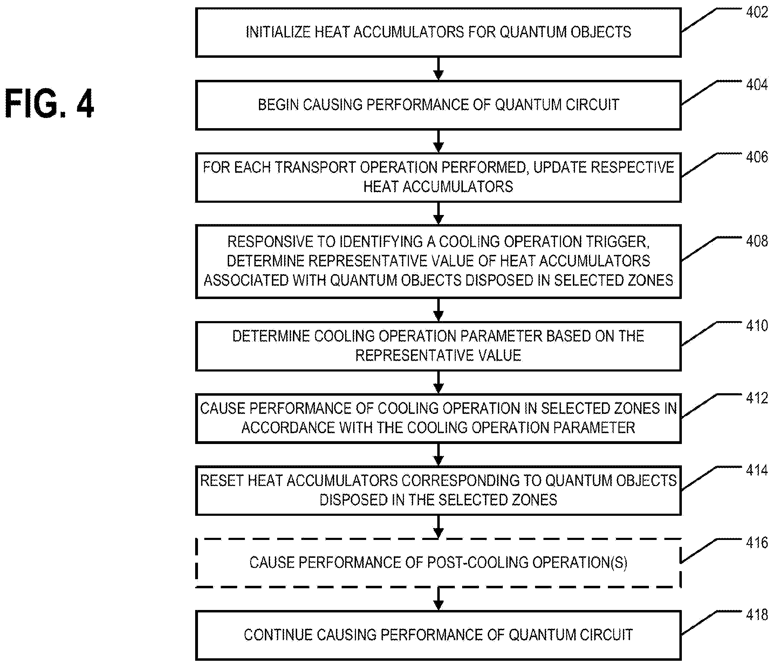

Figure 4 provides a flowchart illustrating various processes, procedures, operations, and/or the like for causing a quantum computer 110 to perform a quantum circuit and/or program using conditional cooling operations (e.g., cooling operations where one or more cooling operation parameters are determined based on heat accumulated by one or more of the quantum objects and/or object crystals to be cooled via the cooling operation). In various embodiments, the processes, procedures, operations, and/or the like illustrated in Figure 4 are performed by the controller 30.

Starting at step/operation 402, the controller 30 initializes respective heat accumulators. Each heat accumulator is associated with a quantum object configured for use as a qubit of the quantum computer 110. For example, the controller 30 stores (e.g., in classical memory 710) a plurality of qubit records with each qubit record associated with a respective quantum object confined by the confinement apparatus 50. Each qubit record comprises one or more heat accumulators configured for tracking the heat accumulated by a respective quantum object (e.g., as a result of transport operations performed thereon and/or other sources of heating). In various embodiments, a single heat accumulator is used to track the heat accumulated in all of the motional modes of the quantum object. In various embodiments, a plurality of heat accumulators is used to track the heat accumulated by the quantum object with each heat accumulator corresponding to a respective one or a plurality of motional modes of the quantum object and/or an object crystal including the quantum object. Initializing a respective heat accumulator includes setting the value of the respective heat accumulator to a defined base value, initialization value, or zero value (e.g., equal to zero).

At step/operation 404, the controller 30 causes the quantum computer 110 to begin performing a quantum circuit and/or quantum program. For example, the controller 30 executes one or more executable instructions from an executable queue to cause one or more components of the quantum computer 110 (e.g., manipulation sources 64, the magnetic field generators 70, voltage sources 80, and/or the like) to be operated such that the quantum computer begins to perform the quantum circuit and/or program.

At step/operation 406, for each transport operation that the controller 30 causes the quantum computer 110 to perform, the controller 30 updates the respective heat accumulators accordingly. For example, when the controller 30 causes the voltage sources 80 to generate and provide waveform voltage signals that causes a transport operation to be performed on a first quantum object, the controller updates the heat accumulator(s) associated with the first quantum object based on the transport operation performed on the first quantum object. For example, the heat accumulator(s) associated with the first quantum object are updated to indicate the heat accumulated by the first quantum object and/or an object crystal including the first quantum object as a result of the transport operation performed thereon.

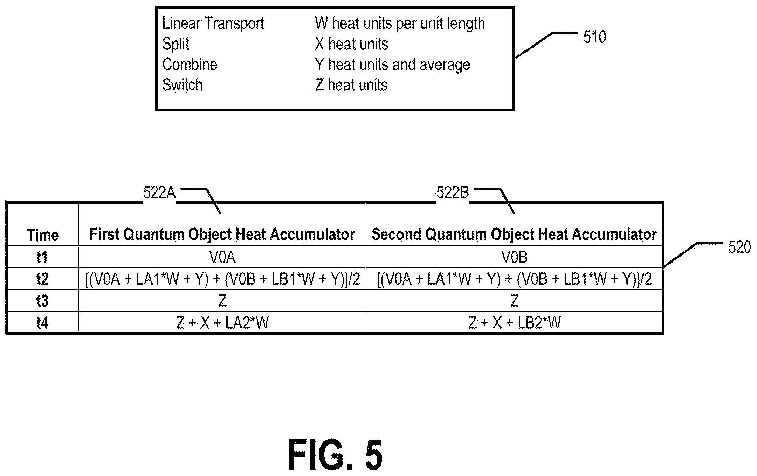

In various embodiments, the heat accumulator(s) associated with a quantum object are updated based on heat values assigned to respective operation identifiers and/or types of transport operations. For example, the controller 30 may store a lookup table, database, and/or the like of heat values that are indexed by operation identifiers configured to identify particular transport operations and/or waveforms and/or by types of transport operations. For example, Figure 5 illustrates an example lookup table 510 of heat values assigned to different types of transport operations. In the illustrated example lookup table 510, the types of transport operations are categories of transport operations. For example, shift transport operations are assigned a heat value of W heat units per unit length of the shift transport operation, split transport operations are assigned a heat value of X heat units, combine transport operations are assigned a heat value of Y heat units and heat equalization of the combined quantum objects is taken into account by averaging the heat accumulators of the combined quantum objects together, and swap transport operations are assigned a heat value of Z heat units.

In various embodiments, the heat equalization feature of a combine transport operation is used to affect a cooling of a quantum object. For example, one or more cooling objects (e.g., quantum objects that are used for sympathetically cooling other quantum objects and/or object crystals) that are maintained at particular locations within the confinement apparatus 50. The cooling objects may be laser cooled (e.g., Doppler cooled, sideband cooled, electromagnetic-induced-transparency (EIT) cooled) while the quantum computer 110 is performing various other operations. For example, the cooling objects may be laser cooled in parallel with other operations performed by the quantum computer 110.

In an example embodiment the cooling objects are maintained at locations that a quantum object traversing the corresponding confinement region would need to interact with (e.g., via a series of a combine operation, swap operation, and split operation) to move past the cooling object. Thus, when a quantum object is being transported along the confinement region, the quantum object is opportunistically cooled via interaction (e.g., heat equalization) with the cooling object that has been laser cooled to a heat accumulator value of approximately zero.

In another example embodiment, the cooling objects may be stored at dedicated cooling sites that are similar to the cache confinement sites disclosed by U.S. Application No. 18/514,115, filed November 20, 2023. In such an embodiment, the controller 30 may determine that a quantum object is to be transported by a dedicated cooling site (e.g., through a junction linked to the dedicated cooling site and/or via which the dedicated cooling site may be accessed), and a cooling operation trigger may be identified in response thereto. For example, a cooling operation parameter (e.g., whether or not the quantum object should be moved to the dedicated cooling site and combined with the cooling object to cause heat equalization between the cooling object and the quantum object) may be determined based on the representative value of the heat accumulator value of the quantum object (e.g., which, in an example embodiment, is the heat accumulator value of the quantum object). When the representative value satisfies a threshold requirement (e.g., the representative value is less than an interaction cooling threshold), the quantum object is transported by the dedicated cooling site without being caused to interact with the cooling object. When the representative value does not satisfy the threshold requirement (e.g., the representative value is equal to or greater than the interaction cooling threshold), the quantum object is transported to the dedicated cooling site and caused to interact with the cooling object (e.g., via a combine transport operation) to cause the quantum object to be cooled. In various embodiments, the heat accumulator value for the quantum object is updated based on the interaction cooling operation (e.g., the interaction of the quantum object with the cooling object via the combine operation) rather than reset (e.g., set to zero).

In various instances, cooling the quantum object via an interaction cooling operation cools the quantum object significantly faster than laser cooling may be performed to cause a similar amount of cooling of the quantum object. Thus, use of triggered and/or opportunistic performance of interaction cooling operations may significantly reduce the amount of run time of the quantum computer 110 that is dedicated to performance of cooling operations.

Referring back to Figures 3A-3D, Figure 5 provides a table 520 that shows the respective heat accumulator values 522A, 522B for the first and second quantum objects 5A, 5B, respectively, at times t1, t2, t3, and t4 for the assigned heat values provided by lookup table 510. For example, at the first time t1, the first heat accumulator 522A associated with the first quantum object 5A has a first initial value V0A indicating the heat accumulated by the first quantum object 5A prior to the first time t1. The second heat accumulator 522B associated with the second quantum object 5B has a second initial value V0B indicating the heat accumulated by the second quantum object 5B prior to the first time t1. Between the first time t1 and the second time t2, a shift transport operation with a length of LA1 is performed on the first quantum object 5A, a shift transport operation with a length of LB1 is performed on the second quantum object 5B, and a combine transport operation is performed on the first and second quantum objects 5A, 5B to cause them to be disposed within a common potential well.

Prior to the performance of the combine transport operation, the first heat accumulator associated with the first quantum object 5A has a value of the first initial value V0A plus the heating caused by the shift transport operation of length LA1 or V0A + LA1*W. Similarly, prior to the performance of the combine transport operation, the second heat accumulator 522B associated with the second quantum object 5B have a value of the second initial value V0B plus the heating caused by the shift transport operation of length LB 1 or V0B + LB 1 *W. Performance of the combine transport operation causes both the first heat accumulator 522A and the second heat accumulator 522B to be increased by the heat value assigned to a combine transport operation (Y heat units). For example, the first heat accumulator 522A is increased by the heat value assigned to a combine transport operation (Y heat units) to determine a first pre-heat equalization value and the second heat accumulator 522B is increased by the heat value assigned to a combine transport operation (Y heat units) to determine a second pre-heat equalization value. Heat equalization of the combined quantum objects is taken into account by then averaging the values of the first heat accumulator 522A and the second heat accumulator 522B. For example, the average of the first pre-heat equalization value and the second pre-heat equalization value is determined. The first heat accumulator 522A and the second heat accumulator 522B are both set equal to the average (e.g., arithmetic mean) of the first pre-heat equalization value and the second pre-heat equalization value, in an example embodiment. Thus, at the second time t2, the first and second heat accumulators 522A, 522B have the value [(V0A + LA1*W + Y) + (V0B + LB1 *W + Y)]/2. Thus, as a result of the heat equalization being taken into account, the first and second heat accumulators 522A, 522B have the same value as a result of the update based on the performance of the combine transport operation is completed.

In instances where the second quantum object 5B is a cooling object, the value of the second heat accumulator 522B prior to the combine operation is significantly less than the value of the first heat accumulator 522A. Thus, in various scenarios, the resulting value of [(V0A + LA1 *W + Y) + (V0B + LB1 *W + Y)]/2 is less than the previous value of the heat accumulator 522A (e.g., possibly approximately half the previous value of the heat accumulator 522A).

As should be understood and as described elsewhere herein, the respective heat accumulators are updated based on the transportation operations performed on the associated quantum objects and/or object crystals.

Continuing with Figure 4, at step/operation 408, responsive to identifying a cooling operation trigger, the controller 30 determines a representative value for the heat accumulators associated with quantum object and/or object crystals disposed within selected zones. For example, the controller 30 is executing a queue of executable instructions that causes the controller 30 to control operation of various components of the quantum computer 110 such that the quantum computer performs at least a portion of a quantum circuit and/or program. In various embodiments, the queue of executable instructions is received from a computing entity 10 and/or generated by the controller 30 based on a quantum circuit and/or program plan received from the computing entity 10. As the controller 30 is generating and/or executing the queue of executable instructions, the controller 30 determines that a cooling operation is to be performed in the selected zones. In an example embodiment, the queue of executable instructions is configured such that each executable instruction is associated with a time at which the respective executable instruction is to be executed. In such an embodiment, the time at which a cooling operation is to be performed may be determined. In an example embodiment, identifying the cooling operation trigger includes determining that the next time step of the quantum processor includes performing a cooling operation in the selected zones of the confinement apparatus.

In various embodiments, the selected zones are defined at least in part based on the confinement apparatus 50 and/or the quantum computer 110. For example, the selected zones may be at least partially defined by geometries of the electrodes 204, alignment of one or more optical beam paths 66 with the selected zones, and/or the like.

Responsive to identifying a cooling operation trigger and/or determining that a cooling operation is to be performed in the selected zones, a representative value of the heat accumulators for the quantum objects and/or object crystals disposed in the selected zones is determined. For example, the controller 30 uses the qubit records associated with the respective quantum objects and/or object crystals to determine and/or identify which quantum objects and/or object crystals are disposed within the selected zones (or will be disposed within the selected zones when the cooling operation(s) are performed in response to the cooling operation trigger). For example, each qubit record may store information regarding the location of the associated quantum object and/or object crystal within the confinement apparatus.

For the quantum objects and/or object crystals identified and/or determined as being disposed within one of the selected zones of the confinement apparatus, the controller 30 determines respective values of the respective heat accumulators (e.g., stored as part of the respective qubit records). The representative value is determined based on the respective values of the respective heat accumulators associated with the quantum objects and/or object crystals disposed within respective selected zones of the confinement apparatus. In an example embodiment, the representative value is the highest or maximum heat accumulator value (per motional mode or per group of motional modes, in an example embodiment) of the respective heat accumulators associated with the quantum objects and/or object crystals disposed within respective selected zones of the confinement apparatus. In an example embodiment, the representative value is an average heat accumulator value (per motional mode or per group of motional modes, in an example embodiment) of the respective heat accumulators associated with the quantum objects and/or object crystals disposed within respective selected zones of the confinement apparatus. In an example embodiment, the representative value is determined based on a statistical description of the distribution of heat accumulator values (per motional mode or per group of motional modes, in an example embodiment) of the respective heat accumulators associated with the quantum objects and/or object crystals disposed within respective selected zones of the confinement apparatus.

At step/operation 410, the controller 30 determines one or more cooling operation parameters based at least in part on the representative value. For example, the representative value may be used as input to a function that provides as output one or more cooling operation parameters (e.g., cooling time, laser power, detuning from resonance, and/or the like). For example, in an example embodiment, a cooling time or other cooling operation parameter is determined calculated based on the representative value.

In an example embodiment, the representative value may be compared to one or more threshold values to determine the one or more cooling parameters. For example, in an example embodiment, the representative value is compared to a threshold to determine whether a threshold requirement is satisfied (e.g., the representative value is less than the threshold). When it is determined (e.g., by the controller 30) that the threshold requirement is not satisfied (e.g., the representative value is greater than or equal to the threshold), the controller 30 determines that a first set of one or more cooling operation parameters are to be used. When it is determined (e.g., by the controller 30) that the threshold requirement is satisfied (e.g., the representative value is less than the threshold), the controller 30 determines that a second set of one or more cooling operation parameters are to be used. At least one parameter of the first set of cooling operation parameters is different from a corresponding parameter in the second set of cooling operation parameters. In various embodiments, a plurality of thresholds, threshold requirements, and sets of cooling operation parameters may be defined such that the one or more cooling operation parameters are determined based on which of the plurality of threshold requirements are satisfied by the representative value.

In various embodiments, the one or more threshold requirements used to determine the cooling operation parameters are determined based on a type of cooling trigger that was identified. For example, when a cooling operation trigger corresponding to a Doppler cooling operation is identified, a Doppler cooling threshold requirement may be used to determine whether a Doppler cooling operation should be performed on the quantum objects and/or object crystals disposed within respective selected zones of the confinement apparatus, in an example embodiment. In such an example embodiment, when the representative value is less than the threshold, no cooling operation (e.g., no Doppler cooling operation) is performed at that time (e.g., the set of cooling operation parameters are determined such that the cooling time is zero).

In another example, a sideband cooling operation is identified, and in response thereto, one or more sideband cooling threshold requirements are used to determine whether a sideband cooling operation should be performed, a partial sideband cooling operation should be performed, or a full sideband cooling operation should be performed. For example, when the representative value is less than a first sideband cooling threshold, no sideband cooling operation is performed at that time (e.g., the set of cooling operation parameters are determined such that the cooling time is zero). When the representative value is less than a second sideband cooling threshold and greater than or equal to the first sideband cooling threshold (the second sideband cooling threshold being greater than the first sideband cooling threshold), a partial cooling operation is performed (e.g., the set of cooling operation parameters are determined such that the cooling time is less than the full cooling/worst-case scenario cooling time, the laser power is less than the full cooling/worst-case scenario laser power, and/or the like). When the representative value is equal to or greater than the second sideband cooling threshold, a full cooling operation is performed (e.g., the set of cooling operation parameters are determined such that he cooling time is the full cooling/worst-case scenario cooling time, the laser power is the full cooling/worst-case scenario laser power, and/or the like). Various levels of partial cooling may be defined for respective types of cooling in various embodiments such that each level of partial cooling is associated with a respective upper and/or lower bound (e.g., threshold values) and a respective set of cooling parameters.

At step/operation 412, the controller 30 controls operation of one or more components of the quantum computer 110 (e.g., the manipulations sources 64 and/or the like) to cause the cooling operation(s) to be performed in the selected zones of the confinement apparatus in accordance with the determined one or more cooling operation parameters. For example, when the one or more cooling operation parameters include a cooling time, the controller 30 may control operation of one or more components of the quantum computer 110 to cause a cooling operation to be performed (e.g., in parallel) in each of the selected zones for the cooling time. In another example, when the one or more cooling operation parameters includes a laser power, the controller 30 may control operation of one or more components of the quantum computer 110 to cause the laser beams having a power indicated by the one or more cooling operation parameters to be delivered to the selected zones during performance of the laser cooling operation. As should be understood, various cooling operation parameters may be defined and determined based at least in part on the representative value as appropriate for the cooling operation being performed (e.g., Doppler cooling, resolved sideband cooling, Electromagnetically induced transparency (EIT) cooling, modulation of the potential well containing the quantum object and/or object crystal to dampen motional mode excitations, and/or the like).

As a result of the cooling operation performed on the selected zones of the confinement apparatus, the heat of the quantum objects and/or object crystals disposed in the selected zones is reduced to a base value. For example, the cooling operation may cause the quantum objects and/or object crystals disposed in the selected zones to be near their motional ground states. To reflect this change in the accumulated heat of the quantum objects and/or object crystals disposed in the selected zones, the controller 30 resets the heat accumulators associated with the quantum objects and/or object crystals disposed in the selected zones at step/operation 414. For example, after and/or during performance of the cooling operations in the selected zones of the confinement apparatus, the heat accumulators associated with the quantum objects and/or object crystals disposed in the selected zones are reset (e.g., set back to a defined base value, initialization value, or zero value).

At step/operation 416, the controller 30 may cause one or more post-cooling operations to be performed in one or more of the selected zones. For example, the controller 30 may control operation of one or more components of the quantum computer 110 to cause a single qubit gate, two-qubit gate, reading operation, or other operation to be performed in one or more of the selected zones. For example, a post-cooling operation may be any operation for which the performance, reliability, noise, or fidelity of the operation is improved when the quantum objects and/or object crystals upon which the operation is performed have recently been cooled to near their motional ground states.

At step/operation 418, the controller 30 continues controlling operation of various components of the quantum computer 110 to continue performing the quantum circuit and/or program. For example, the controller 30 continues to execute executable instructions from the queue of executable instructions to cause the quantum computer 110 to continue performing the quantum circuit and/or program.

For example, continuing with Figure 5, between the second time t2 and the third time t3, the controller causes a cooling operation to be performed in the second zone 240B and then performs a swap transport operation on the first and second quantum objects 5A, 5B. Thus, the first heat accumulator 522A and the second heat accumulator 522B are reset (e.g., set equal to zero) to reflect the performance of the cooling operation on the first and second quantum objects 5A, 5B and then updated to include the heat accumulated by the first and second quantum objects 5A, 5B as a result of the swap transport operation performed thereon. For example, the first and second heat accumulators 522A, 522B are updated, at the third time t3, to a value of Z heat units as a result of the swap transport operation performed on the first and second quantum objects 5A, 5B after the performance of the cooling operation. Between the third time t3 and the fourth time t4, a split transport operation is performed on the first and second quantum objects 5A, 5B, a shift transport operation of length LA2 is performed on the first quantum object 5A, and a shift transport operation of length LB2 is performed on the second quantum object 5B. For example, the first heat accumulator 522A is updated, at the fourth time t4, to indicate that the first quantum object 5A accumulated heat from the split transport operation (e.g., X heat units) and the shift transport operation of length LA2 (e.g., LA2*W heat units). The second heat accumulator 522B is updated, at the fourth time t4, to indicate that the second quantum object 5B accumulated heat from the split transport operation (e.g., X heat units) and the shift transport operation of length LB2 (e.g., LB2*W heat units).

As should be understood based on the disclosure provided herein, the cooling operations may include multiple portions that are configured to cool particular motional modes of the quantum objects and/or object crystals and/or groups of motional modes (longitudinal modes, first radial modes, second radial modes, and/or the like) of the quantum objects and/or object crystals. The one or more cooling operation parameters may include a plurality of cooling operation parameters that include sets of one or more cooling operation parameters corresponding to different portions of the cooling operation. For example, the plurality of cooling operation parameters may indicate that a portion of the cooling operation that is configured to cool a first motional mode of the quantum objects and/or object crystals should be performed for a first cooling time and a portion of the cooling operation that is configured to cool a second motional mode of the quantum objects and/or object crystals should be performed for a second cooling time.

### Example Assignment of Heat Values

In various embodiments, respective heat values are assigned to respective types of transport operations. For example, as shown by lookup table 510, each defined type of transportation operation is assigned a respective heat value. In various embodiments, one or more of the heat values may depend on a parameter of the transport operation (e.g., the length of a shift transport operation), a location within the confinement apparatus at which the transport operation was performed, and/or the like.

In various embodiments, the respective heat values are assigned to respective types of transport operations and/or operation identifiers (configured to identify respective transport operations) based on a priori information. In various embodiments, the respective heat values are assigned to respective types of transport operations and/or operation identifiers (configured to identify respective transport operations) based on a calibration process. For example, a calibration process may be performed where a particular type of transport operation or a particular transport operation (identified by a respective operation identifier) may be performed one or more times on a quantum object and/or object crystal, and the (average) heat accumulated by the quantum object and/or object crystal during performance of the particular type of transport operation or the particular transport operation (identified by the respective operation identifier) may be measured, determined, and/or the like. The heat value assigned to the particular type of transportation operation or the operation identifier configured to identify the particular transport operation is generated and/or determined based on the (average) heat accumulated by the quantum object and/or object crystal during performance of the particular type of transport or the particular transport operation (identified by the respective operation identifier) measured, determined, and/or the like during the calibration process.

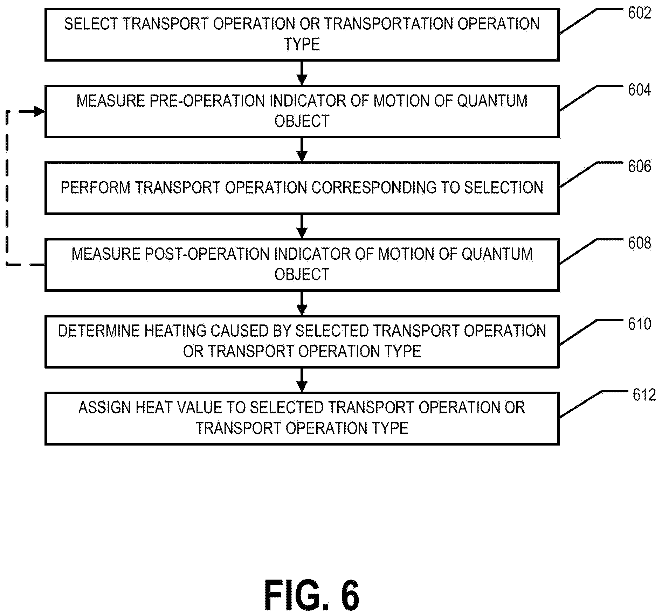

Figure 6 provides a flowchart illustrating various processes, procedures, operations, and/or the like that may be performed (e.g., via a controller 30 of a quantum computer 110 or other quantum system) to assign a heat value to a type of transport operation based on a calibration process. Starting at step/operation 602, the controller 30 selects a particular transport operation or a type of transport operation. For example, the controller 30 may selected a particular transport operation or a type of transport operation based on user input (e.g., received via the computing entity 10 and/or the like). In another example, the controller 30 is programmed to periodically, regularly, and/or the like one or more calibration processes and the particular transport operation and/or the type of transport operation is selected via execution of executable instructions configured to cause the controller 30 to control one or more components of the quantum computer 110 to cause the calibration processes to be performed.

In various embodiments, a plurality of types of transport operations are defined such that controller 30 is programmed to be able to cause performance of respective types of transport operations of the plurality of types on one or more quantum objects and/or object crystals confined by the confinement apparatus 50. In an example embodiment, the plurality of types of transport operations includes categories of transport operations such as shift transport operations, combine transport operations, swap transport operations, split transport operations, and/or the like. In an example embodiment, the plurality of types of transport operations may further include junction traversing operations (e.g., where the quantum object and/or object crystal is caused to pass through a junction of the confinement apparatus 50).

In various embodiments, the controller 30 stores (e.g., in memory 710) and is configured and/or programmed to enact a plurality of waveforms. Each waveform is associated with and/or identified by a respective operation identifier. Each waveform is configured to enact a particular transport operation when waveform voltage signals generated based on the waveform are applied to the electrodes 204. In an example embodiment, a heat value is determined for each of the plurality of waveforms and stored in association with the operation identifier configured to identify the respective waveform.

At step/operation 604, the controller 30 controls one or more components of the quantum computer 110 to cause a pre-operation indicator of motion of the quantum object to be measured. For example, prior to performing the selected type of transport operation on the quantum object (or object crystal), a pre-operation indicator of motion of the quantum object is measured. The pre-operation indicator of motion of the quantum object is configured to provide an indication of the temperature and/or motional energy of the quantum object (or object crystal) prior to the performance of the selected type of transport operation.

In an example embodiment, the pre-operation indicator of motion of the quantum object is a fluorescence spectrum of the quantum object. For example, a light or laser beam may be shined/incident on the quantum object (or object crystal) and the light reflected therefrom may be captured. Various other techniques for measuring an indicator of motion of the quantum object may be used, as appropriate for the application. For example, the pre-operation indicator of motion of the quantum object may be measured using one or more manipulation sources 64 and the optics collection system 90, in an example embodiment.

In various embodiments, the pre-operation indicator of motion of the quantum object indicates the temperature of the quantum object (or object crystal) and/or the amount of motional energy in all of the motional modes of the quantum object (or object crystal). In various embodiments, the pre-operation indicator of motion of the quantum object comprises a plurality of indicators that are each configured to indicate the motional energy in a group of motional modes (e.g., longitudinal modes and radial modes; longitudinal modes, first radial (parallel to the plane of the confinement apparatus) modes, and second radial (perpendicular to the plane of the confinement apparatus) modes; and/or the like). In various embodiments, the pre-operation indicator of motion of the quantum object comprises a plurality of indicators that are each configured to indicate the motional energy in a respective motional mode.

At step/operation 606, the controller 30 controls operation of one or more components of the quantum computer 110 to cause the selected particular transport operation and/or a transport operation of the selected type of transport operation to be performed on the quantum object (or object crystal). For example, the controller 30 may cause the transportation operation (e.g., a transport operation of a particular category of transport operation such as shift, combine, swap, split, junction traversal, and/or other transport operation, or a transport operation caused by application of waveform voltage signals in accordance with a particular waveform to respective electrodes) to be performed on the quantum object (or object crystal).

At step/operation 608, the controller 30 controls one or more components of the quantum computer 110 to cause a post-operation indicator of motion of the quantum object to be measured. For example, after performance of the selected particular transport operation or type of transport operation on the quantum object (or object crystal), a post-operation indicator of motion of the quantum object is measured. The post-operation indicator of motion of the quantum object is configured to provide an indication of the temperature and/or motional energy of the quantum object (or object crystal) after the performance of the selected type of transport operation.

In various embodiments, the post-operation indicator of motion of the quantum object is a same type of measurement as the pre-operation indicator of motion of the quantum object. For example, in an example embodiment, where the pre-operation indicator of motion of the quantum object is a fluorescence spectrum of the quantum object (or object crystal) taken, measured, and/or captured before performance of the selected type of transport operation on the quantum object (or object crystal), the post-operation indicator of motion of the quantum object is a fluorescence spectrum of the quantum object (or object crystal) taken, measured, and/or captured after performance of the selected type of transport operation.

In various embodiments, the post-operation indicator of motion of the quantum object indicates the temperature of the quantum object (or object crystal) and/or the amount of motional energy in all of the motional modes of the quantum object (or object crystal) after performance of the selected type of transport operation on the quantum object (or object crystal). In various embodiments, the post-operation indicator of motion of the quantum object comprises a plurality of indicators that are each configured to indicate the motional energy in a group of motional modes (e.g., longitudinal modes and radial modes; longitudinal modes, first radial (parallel to the plane of the confinement apparatus) modes, and second radial (perpendicular to the plane of the confinement apparatus) modes; and/or the like). In various embodiments, the post-operation indicator of motion of the quantum object comprises a plurality of indicators that are each configured to indicate the motional energy in a respective motional mode.

At step/operation 610, the controller 30 (or a computing entity 10) determines the amount of heating and/or increase in motional energy experienced by the quantum object (or object crystal) as a result of the selected particular transport operation and/or a transport operation of the selected type of transport operation being performed thereon. For example, the controller 30 (or a computing entity 10) may determine the change in the motional energy of the quantum object (or object crystal) as a result of the selected particular transport operation and/or a transport operation of the selected type of transport operation being performed thereon. In an example embodiment, the amount of heating and/or change in the motional energy of the quantum object (or object crystal) is determined by comparing the post-operational indicator of motion of the quantum object and the pre-operational indicator of motion of the quantum object. For example, comparing the post-operational indicator of motion of the quantum object and the pre-operational indicator of motion of the quantum object may indicate an increase in motional energy of the quantum object (or object crystal) after the transport operation was performed. The amount of increase of the motional energy is (directly) proportional to the amount of heating the quantum object (or object crystal) experienced as a result of the transport operation being performed thereon.

In various embodiments, the overall change in motional energy of the quantum object (or object crystal) is determined. In various embodiments, the respective changes in motional energy in groups of motional modes of the quantum object (or object crystal) are determined. In various embodiments, the respective changes in motional energy in respective motional modes of the quantum object (or object crystal) are determined.

In various embodiments, steps/operations 604-608 are repeated a plurality of times such that at step/operation 610 a distribution of changes in motional energy of the quantum object (or object crystal) is determined.

Based on the results of step/operation 610, at step/operation 612, the controller 30 (or a computing entity 10) assigns a heat value to the selected particular transport operation (e.g., identified by the corresponding operation identifier) or selected type of transport operation. For example, the heat value assigned to the selected particular transport operation (e.g., identified by the corresponding operation identifier) or selected type of transport operation is assigned based on the measured and/or empirically determined change in motional energy of the quantum object (or object crystal) as a result of the selected particular transport operation or a transport operation of the selected type of transport operation being performed on the quantum object (or object crystal). In an example embodiment, the heat value is provided and/or assigned in physical units (e.g., micro-joules, micro-joules per millimeter, and/or the like). In an example embodiment, the heat value is provided and/or assigned in arbitrary units (e.g., configured to reflect the relative amount of heating experienced by the quantum objects (or object crystals) as a result of the performance of various transport operations and/or various types of transport operations thereon).

The assigned heat value is then stored (e.g., in classical memory 710) in association with an operation identifier configured to identify the selected particular transport operation and/or the selected type of transport operation. For example, the assigned heat value may be stored in a database of calibration-determined data, in an example embodiment. In an example embodiment, the assigned heat value is stored as part of a lookup table similar to lookup table 510. In various embodiments, the assigned heat value is stored in association with the operation identifier configured to identify the selected particular transport operation and/or the selected type of transport operation in a format and/or data structure that is appropriate for the application. For example, in an example embodiment, the assigned heat value may be stored in a look up table include heat values indexed by operation identifiers.

### Technical Advantages

In various scenarios, during the performance of experiments, controlled quantum state evolution, quantum computations, and/or the like, various transport operations are performed on the quantum objects and/or object crystals within the confinement apparatus. During performance of such transportation operations, the quantum objects and/or object crystals become excited and/or heated such that the quantum objects and/or object crystals are no longer in their motional ground state. Cooling operations are then used to reduce the motional energy of the quantum object and/or object crystal. For example, laser cooling may be used to sympathetically cool the quantum object through the use of the accompanying coolant object.

Laser cooling is a slow process compared to various other processes executed during the performance of experiments, controlled quantum state evolution, quantum computations, and/or the like. For example, the time required to perform transportation and cooling operations is conventionally considered a limiting factor in the computational speed of QCCD quantum computers. Moreover, the significant fraction of quantum circuit run time required to cool quantum objects and/or object crystals after performance of a transportation operation can contribute to memory error. Thus, technical problems exist as to how to quickly and efficiently cool and/or reduce the motional energy of a quantum object and/or object crystal.

Conventionally, cooling operations, such as laser cooling, are performed assuming a baseline scenario for a quantum object. For example, the cooling operation is performed in accordance with parameters determined by calibrating the operations as a function of the quantum computer performance. Such parameters are configured to provide sufficient cooling regardless of the heat state of the quantum object to be cooled. For example, each cooling operation performed is performed using the same cooling operation parameters. However, in various scenarios, performing cooling operations based on worst case scenario cooling operation parameters results in over cooling of the quantum objects and/or object crystals. For example, a cooling time determined based on a worst-case scenario may be longer than necessary for cooling a particular quantum object. In another example, power of a cooling laser determined based on a worst-case scenario may be larger than necessary for cooling a particular quantum object.

In various embodiments, the heat accumulated by respective quantum objects and/or object crystals is tracked. Cooling operation parameters are then determined based on the heat accumulated by the quantum objects and/or object crystals to be cooled. Cooling operations are performed in accordance with the cooling operation parameters determined based on the heat accumulated by the quantum objects and/or object crystals to be cooled. This conditional cooling of the quantum objects and/or object crystals enables the cooling operations to be tailored to the heat accumulated by the quantum objects and/or object crystals to be cooled, rather than to tailored to a hypothetical worst-case scenario. This enables appropriate reductions in, for example, the cooling time, applied laser power, and/or the like. Therefore, various embodiments provide technical improvements to the fields of quantum system control and quantum computing by reducing the fraction of run time of a quantum circuit that is spent performing cooling operations, enabling the reduction in power consumption of a quantum system such as a QCCD-based quantum computer, and/or the like. These improvements and/or technical advantages are realized through the determination of cooling operation parameters based on the heat accumulated by the quantum objects and/or object crystals to be cooled via a particular instance of (simultaneous) cooling operations.

### Exemplary Controller

In various embodiments, a quantum computer 110 comprises a controller 30 configured to control various elements of the quantum computer 110. In various embodiments, a controller 30 may be configured to cause a quantum computer 110 to perform various operations (e.g., computing operations such as gate operations, cooling operations, transport operations, qubit interaction operations, qubit measurement operations; leakage suppression/transformation operations; and/or the like). For example, the controller 30 may be configured to cause performance one or more transport operations, one or more cooling operations, one or more post-cooling operations (e.g., a two-qubit gate), and/or the like. For example, the controller 30 may be configured to control a cryogenic system and/or vacuum system controlling the temperature and pressure within the cryogenic and/or vacuum chamber 40, manipulation sources 64, voltage sources 80 configured to apply voltage signals (e.g., periodic voltage signals, waveform voltage signals) to electrodes (e.g., RF rails 210, electrodes 204) of the confinement apparatus 50, magnetic field generators 70, and/or systems controlling the environmental conditions (e.g., temperature, humidity, pressure, and/or the like) within the cryogenic and/or vacuum chamber 40 and/or configured to manipulate and/or cause a controlled evolution of quantum states of one or more quantum objects confined by the quantum object confinement apparatus 50.

As shown in Figure 7, in various embodiments, the controller 30 may comprise various controller elements including processing elements 705, memory 710, driver controller elements 715, a communication interface 720, analog-digital converter elements 725, and/or the like. For example, the processing elements 705 may comprise programmable logic devices (CPLDs), microprocessors, coprocessing entities, application-specific instruction-set processors (ASIPs), integrated circuits, application specific integrated circuits (ASICs), field programmable gate arrays (FPGAs), programmable logic arrays (PLAs), hardware accelerators, other processing devices and/or circuitry, and/or the like. and/or controllers. In various embodiments, the processing elements 705 are classical (e.g., semiconductor-based) processing devices. The term circuitry may refer to an entirely hardware embodiment or a combination of hardware and computer program products. In an example embodiment, the processing element 705 of the controller 30 comprises a clock and/or is in communication with a clock.

For example, the memory 710 may comprise non-transitory memory such as volatile and/or non-volatile memory storage such as one or more of as hard disks, ROM, PROM, EPROM, EEPROM, flash memory, MMCs, SD memory cards, Memory Sticks, CBRAM, PRAM, FeRAM, RRAM, SONOS, racetrack memory, RAM, DRAM, SRAM, FPM DRAM, EDO DRAM, SDRAM, DDR SDRAM, DDR2 SDRAM, DDR3 SDRAM, RDRAM, RIMM, DIMM, SIMM, VRAM, cache memory, register memory, and/or the like. In various embodiments, the memory 710 includes a classical (e.g., semiconductor-based) memory. In various embodiments, the memory 710 may store qubit records corresponding to the qubits of the quantum computer (e.g., in a qubit record data store, qubit record database, qubit record table, and/or the like), assigned heat values (e.g., a heat value look-up table), an executable queue, computer program code (e.g., in a one or more computer languages, specialized controller language(s), and/or the like), and/or the like. In various embodiments, each qubit record includes one or more heat accumulators associated with a respective quantum object confined by the confinement apparatus. In an example embodiment, execution of at least a portion of the computer program code stored in the memory 710 (e.g., by a processing element 705) causes the controller 30 to perform one or more steps, operations, processes, procedures and/or the like described herein.

In various embodiments, the driver controller elements 715 may include one or more drivers and/or controller elements each configured to control one or more drivers. In various embodiments, the driver controller elements 715 may comprise drivers and/or driver controllers. For example, the driver controllers may be configured to cause one or more corresponding drivers to be operated in accordance with executable instructions, commands, and/or the like scheduled and executed by the controller 30 (e.g., by the processing element 705). In various embodiments, the driver controller elements 715 may enable the controller 30 to operate and/or control one or more manipulation sources 64, control one or more magnetic field generators 70, control one or more voltages sources 80 and/or drivers, operate vacuum and/or cryogenic systems, and/or the like. In various embodiments, the drivers may be laser drivers; vacuum component drivers; voltage sources (e.g., AC voltage sources, arbitrary waveform generators (AWG), direct digital synthesizers (DDS), and/or the like); cryogenic and/or vacuum system component drivers; and/or the like. In various embodiments, the controller 30 comprises means for communicating and/or receiving signals from one or more optical receiver components such as cameras, MEMs cameras, CCD cameras, photodiodes, photomultiplier tubes, and/or the like. For example, the controller 30 may comprise one or more analog-digital converter elements 725 configured to receive signals from one or more optical receiver components, calibration sensors, and/or the like. For example, the controller 30 may receive measurements corresponding to conditions in particular regions and/or portions of the confinement apparatus 50 and/or corresponding to various via the analog-digital converter elements 725.

In various embodiments, the controller 30 may comprise a communication interface 720 for interfacing and/or communicating with a computing entity 10. For example, the controller 30 may comprise a communication interface 720 for receiving executable instructions, command sets, and/or the like from the computing entity 10 and providing output received from the quantum computer 110 (e.g., from an optical collection system or other measurement system) and/or the result of a processing the output to the computing entity 10. In various embodiments, the computing entity 10 and the controller 30 may communicate via a direct wired and/or wireless connection and/or one or more wired and/or wireless networks 20.

### Exemplary Computing Entity

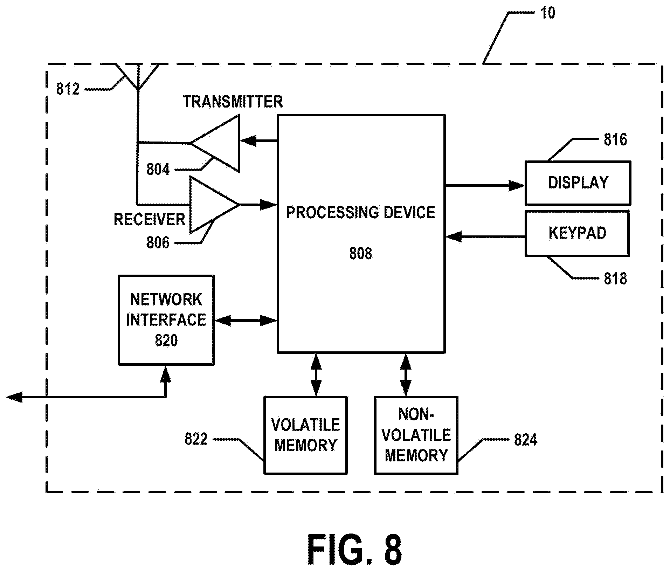

Figure 8 provides an illustrative schematic representative of an example computing entity 10 that can be used in conjunction with embodiments of the present invention. In various embodiments, a computing entity 10 is configured to allow a user to provide input to the quantum computer 110 (e.g., via a user interface of the computing entity 10) and receive, display, analyze, and/or the like output from the quantum computer 110. For example, a user may operate a computing entity 10 to generate and/or program a quantum algorithm and/or quantum circuit that may be provided such that the controller 30 may receive the quantum algorithm and/or quantum circuit and cause the quantum computer 110 to perform the quantum algorithm and/or quantum circuit.

As shown in Figure 8, a computing entity 10 can include an antenna 812, a transmitter 814 (e.g., radio), a receiver 806 (e.g., radio), and a processing device and/or element 808 that provides signals to and receives signals from the transmitter 814 and receiver 806, respectively. The signals provided to and received from the transmitter 814 and the receiver 806, respectively, may include signaling information/data in accordance with an air interface standard of applicable wireless systems to communicate with various entities, such as a controller 30, other computing entities 10, and/or the like. In this regard, the computing entity 10 may be capable of operating with one or more air interface standards, communication protocols, modulation types, and access types. For example, the computing entity 10 may be configured to receive and/or provide communications using a wired data transmission protocol, such as fiber distributed data interface (FDDI), digital subscriber line (DSL), Ethernet, asynchronous transfer mode (ATM), frame relay, data over cable service interface specification (DOCSIS), or any other wired transmission protocol. Similarly, the computing entity 10 may be configured to communicate via wireless external communication networks using any of a variety of protocols, such as general packet radio service (GPRS), Universal Mobile Telecommunications System (UMTS), Code Division Multiple Access 2000 (CDMA2000), CDMA2000 1X (1xRTT), Wideband Code Division Multiple Access (WCDMA), Global System for Mobile Communications (GSM), Enhanced Data rates for GSM Evolution (EDGE), Time Division-Synchronous Code Division Multiple Access (TD-SCDMA), Long Term Evolution (LTE), Evolved Universal Terrestrial Radio Access Network (E-UTRAN), Evolution-Data Optimized (EVDO), High Speed Packet Access (HSPA), High-Speed Downlink Packet Access (HSDPA), IEEE 802.11 (Wi-Fi), Wi-Fi Direct, 802.16 (WiMAX), ultra-wideband (UWB), infrared (IR) protocols, near field communication (NFC) protocols, Wibree, Bluetooth protocols, wireless universal serial bus (USB) protocols, and/or any other wireless protocol. The computing entity 10 may use such protocols and standards to communicate using Border Gateway Protocol (BGP), Dynamic Host Configuration Protocol (DHCP), Domain Name System (DNS), File Transfer Protocol (FTP), Hypertext Transfer Protocol (HTTP), HTTP over TLS/SSL/Secure, Internet Message Access Protocol (IMAP), Network Time Protocol (NTP), Simple Mail Transfer Protocol (SMTP), Telnet, Transport Layer Security (TLS), Secure Sockets Layer (SSL), Internet Protocol (IP), Transmission Control Protocol (TCP), User Datagram Protocol (UDP), Datagram Congestion Control Protocol (DCCP), Stream Control Transmission Protocol (SCTP), HyperText Markup Language (HTML), and/or the like.

Via these communication standards and protocols, the computing entity 10 can communicate with various other entities using concepts such as Unstructured Supplementary Service information/data (USSD), Short Message Service (SMS), Multimedia Messaging Service (MMS), Dual-Tone Multi-Frequency Signaling (DTMF), and/or Subscriber Identity Module Dialer (SIM dialer). The computing entity 10 can also download changes, add-ons, and updates, for instance, to its firmware, software (e.g., including executable instructions, applications, program modules), and operating system.

The computing entity 10 may also comprise a user interface device comprising one or more user input/output interfaces (e.g., a display 816 and/or speaker/speaker driver coupled to a processing device and/or element 808 and a touch screen, keyboard, mouse, and/or microphone coupled to a processing device and/or element 808). For instance, the user output interface may be configured to provide an application, browser, user interface, interface, dashboard, screen, webpage, page, and/or similar words used herein interchangeably executing on and/or accessible via the computing entity 10 to cause display or audible presentation of information/data and for interaction therewith via one or more user input interfaces. The user input interface can comprise any of a number of devices allowing the computing entity 10 to receive data, such as a keypad 818 (hard or soft), a touch display, voice/speech or motion interfaces, scanners, readers, or other input device. In embodiments including a keypad 818, the keypad 818 can include (or cause display of) the conventional numeric (0-9) and related keys (#, *), and other keys used for operating the computing entity 10 and may include a full set of alphabetic keys or set of keys that may be activated to provide a full set of alphanumeric keys. In addition to providing input, the user input interface can be used, for example, to activate or deactivate certain functions, such as screen savers and/or sleep modes. Through such inputs the computing entity 10 can collect information/data, user interaction/input, and/or the like.

The computing entity 10 can also include volatile storage or memory 822 and/or non-volatile storage or memory 824, which can be embedded and/or may be removable. For instance, the non-volatile memory may be ROM, PROM, EPROM, EEPROM, flash memory, MMCs, SD memory cards, Memory Sticks, CBRAM, PRAM, FeRAM, RRAM, SONOS, racetrack memory, and/or the like. The volatile memory may be RAM, DRAM, SRAM, FPM DRAM, EDO DRAM, SDRAM, DDR SDRAM, DDR2 SDRAM, DDR3 SDRAM, RDRAM, RIMM, DIMM, SIMM, VRAM, cache memory, register memory, and/or the like. The volatile and non-volatile storage or memory can store databases, database instances, database management system entities, data, applications, programs, program modules, scripts, source code, object code, byte code, compiled code, interpreted code, machine code, executable instructions, and/or the like to implement the functions of the computing entity 10.

### Conclusion

Many modifications and other embodiments of the invention set forth herein will come to mind to one skilled in the art to which the invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method for performing a cooling operation, the method comprising:
identifying, by a controller (30) of a quantum system (100), one or more quantum objects (5) of a plurality of quantum objects confined by a confinement apparatus (50) that are disposed in one or more selected zones (240A, 240B) of the confinement apparatus (50), wherein the plurality of quantum objects are associated with respective heat accumulators (522A, 522B) stored by a classical memory (710) accessible to the controller (30);
determining, by the controller (30), a representative value based on heat accumulator values of the respective heat accumulators (522A, 522B) associated with the one or more quantum objects (5) that are disposed in the one or more selected zones (240A, 240B);
determining, by the controller (30), a cooling operation parameter based at least in part on the representative value; and
causing, by the controller (30), performance of a cooling operation in the one or more selected zones (240A, 240B) of the confinement apparatus (50) in accordance with the cooling operation parameter.

2. The method of claim 1, further comprising:
causing, by the controller (30), a transport operation to be performed on a first quantum object (5A) of plurality of quantum objects; and
updating, by the controller (30), a respective heat accumulator (522A, 522B) associated with the first quantum object (5A) by a heat value corresponding to the transport operation.

3. The method of claim 2, wherein the heat value corresponding to the transport operation is determined based at least in part on a type of the transport operation or an operation identifier configured to identify the transport operation.

4. The method of claim 3, wherein the type of the transport operation is at least one of:
one of a category of transport operations or a transportation operation corresponding to a particular waveform, or
a combine transport operation and updating the respective heat accumulator (522A, 522B) associated with the first quantum object (5A) by the heat value corresponding to the transport operation comprises (a) adding a heat value corresponding to the combine transport operation to the respective heat accumulator (522A, 522B) to determine a respective pre-heat equalization value and (b) updating the respective heat accumulator value to be equal to an average of the respective pre-heat equalization value and a pre-heat equalization value corresponding to a second quantum object (5B) that was transported into proximity of the first quantum (5A) object via the combine transport operation.

5. The method of claim 3, wherein at least one of (a) a plurality of waveforms are stored in a memory (710) of the controller (30) and each waveform of the plurality of waveforms is configured to perform a respective transport operation and is indexed by a respective operation identifier, a respective heat value assigned to the respective operation identifier or (b) a plurality of types of transport operations are defined and each type of transport operation of the plurality of types of transport operations is assigned a respective heat value.

6. The method of claim 5, wherein the respective heat value assigned to the respective operation identifier or the type of transport operation is determined via a calibration process.

7. The method of claim 1, further comprising after or during causing performance of the cooling operation, resetting the respective heat accumulators (522A, 522B) associated with the one or more quantum objects (5) that are disposed in the one or more selected zones (240A, 240B).

8. The method of claim 1, further comprising, after causing performance of the cooling operation, causing performance of a post-cooling operation in at least one of the selected zones (240A, 240B).

9. The method of claim 8, wherein the post-cooling operation is a two-qubit gate.

10. The method of claim 1, wherein, for each quantum object (5) of the plurality of quantum objects, the respective heat accumulators (522A, 522B) comprise at least one of:
a respective heat accumulator (522A, 522B) associated with the quantum object (5), or
one or more mode-specific heat accumulators each associated with a corresponding motional mode of the quantum object (5).

11. The method of claim 1, wherein the representative value is the maximum heat accumulator value of the respective heat accumulators (522A, 522B) associated with the one or more quantum objects (5) that are disposed in the one or more selected zones (240A, 240B).

12. The method of claim 1, wherein the cooling operation parameter is at least one of:
determined based at least in part on a function that receives the representative value as input,
determined based at least in part on identifying at least one threshold requirement that is satisfied by the representative parameter,
determined based at least in part on comparing the representative value to one or more thresholds, or
a cooling time, and the cooling operation is performed for the cooling time.

13. The method of claim 1, wherein the respective heat accumulators (522A, 522B) are stored as part of respective qubit records that comprise location information for the associated quantum object (5).

14. A controller (30) configured to control operation of one or more components of a quantum system (100), the quantum system (100) comprising a confinement apparatus (50) configured to confine a plurality of quantum objects, the controller (30) comprising at least one processing element (705) and at least one non-transitory memory (710), the at least one non-transitory memory (710) storing executable instructions configured to cause the controller (30) to perform the method of any of claims 1 to 13.

15. A quantum system (100) comprising a controller (30) and a confinement apparatus (50) configured to confine a plurality of quantum objects, wherein the controller (30) is configured to control operation of one or more components of the quantum system (100) to cause the quantum system (100) to perform a conditional cooling operation, wherein the controller (30) is configured to perform the method of any of claims 1-13.

## Patentansprüche

1. Verfahren zum Durchführen eines Kühlvorgangs, wobei das Verfahren umfasst:
Identifizieren eines oder mehrerer Quantenobjekte (5) einer Vielzahl von Quantenobjekten, die durch eine Einschlusseinrichtung (50) eingeschlossen sind und in einer oder mehreren ausgewählten Zonen (240A, 240B) der Einschlusseinrichtung (50) eingerichtet sind, durch ein Steuergerät (30) eines Quantensystems (100), wobei die Vielzahl von Quantenobjekten jeweiligen Wärmeakkumulatoren (522A, 522B) zugeordnet ist, die durch einen klassischen Speicher (710) gespeichert werden, auf den das Steuergerät (30) zugreifen kann;
Bestimmen eines repräsentativen Werts durch das Steuergerät (30) basierend auf Wärmeakkumulatorwerten der jeweiligen Wärmeakkumulatoren (522A, 522B), die dem einen oder den mehreren Quantenobjekten (5) zugeordnet sind, die in der einen oder den mehreren ausgewählten Zonen (240A, 240B) eingerichtet sind;
Bestimmen eines Kühlvorgangsparameters durch das Steuergerät (30) zumindest teilweise basierend auf dem repräsentativen Wert; und
Veranlassen einer Durchführung eines Kühlvorgangs in der einen oder den mehreren ausgewählten Zonen (240A, 240B) der Einschlusseinrichtung (50) durch das Steuergerät (30) in Übereinstimmung mit dem Kühlvorgangsparameter.

2. Verfahren nach Anspruch 1, ferner umfassend:
Veranlassen durch das Steuergerät (30), dass ein Transportvorgang an einem ersten Quantenobjekt (5A) von Vielzahl von Quantenobjekten durchgeführt wird; und
Aktualisieren eines jeweiligen Wärmeakkumulators (522A, 522B), der dem ersten Quantenobjekt (5A) zugeordnet ist, durch das Steuergerät (30) um einen Wärmewert, der dem Transportvorgang entspricht.

3. Verfahren nach Anspruch 2, wobei der Wärmewert, der dem Transportvorgang entspricht, zumindest teilweise basierend auf einem Typ des Transportvorgangs oder einer Vorgangskennung, die dazu konfiguriert ist, den Transportvorgang zu identifizieren, bestimmt wird.

4. Verfahren nach Anspruch 3, wobei der Typ des Transportvorgangs mindestens einer von Folgendem ist:
einer von einer Kategorie von Transportvorgängen oder einem Transportvorgang, der einer bestimmten Wellenform entspricht, oder
ein Kombinier-Transportvorgang, und wobei das Aktualisieren des jeweiligen Wärmeakkumulators (522A, 522B), der dem ersten Quantenobjekt (5A) zugeordnet ist, um den Wärmewert, der dem Transportvorgang entspricht, Folgendes umfasst: (a) Addieren eines Wärmewerts, der dem Kombinier-Transportvorgang entspricht, zu dem jeweiligen Wärmeakkumulator (522A, 522B), um einen jeweiligen Vorwärmeausgleichswert zu bestimmen, und (b) Aktualisieren des jeweiligen Wärmeakkumulatorwerts, sodass er gleich einem Durchschnitt des jeweiligen Vorwärmeausgleichswerts und eines Vorwärmeausgleichswerts ist, der einem zweiten Quantenobjekt (5B) entspricht, das über den Kombinier-Transportvorgang in die Nähe des ersten Quanten- (5A) Objekts transportiert wurde.

5. Verfahren nach Anspruch 3, wobei mindestens eines von Folgendem gilt: (a) eine Vielzahl von Wellenformen ist in einem Speicher (710) des Steuergeräts (30) gespeichert und jede Wellenform der Vielzahl von Wellenformen ist dazu konfiguriert, einen jeweiligen Transportvorgang durchzuführen, und ist durch eine jeweilige Vorgangskennung, einen jeweiligen Wärmewert, der der jeweiligen Vorgangskennung zugewiesen ist, indiziert, oder (b) eine Vielzahl von Typen von Transportvorgängen ist definiert und jedem Typ von Transportvorgang der Vielzahl von Typen von Transportvorgängen ist ein jeweiliger Wärmewert zugewiesen.

6. Verfahren nach Anspruch 5, wobei der jeweilige Wärmewert, der der jeweiligen Vorgangskennung oder dem Typ von Transportvorgang zugewiesen ist, über einen Kalibriervorgang bestimmt wird.

7. Verfahren nach Anspruch 1, ferner umfassend, nach oder während des Veranlassens der Durchführung des Kühlvorgangs, Zurücksetzen der jeweiligen Wärmeakkumulatoren (522A, 522B), die dem einen oder den mehreren Quantenobjekten (5) zugeordnet sind, die in der einen oder den mehreren ausgewählten Zonen (240A, 240B) eingerichtet sind.

8. Verfahren nach Anspruch 1, ferner umfassend, nach dem Veranlassen der Durchführung des Kühlvorgangs, Veranlassen einer Durchführung eines Post-Kühlvorgangs in mindestens einer der ausgewählten Zonen (240A, 240B).

9. Verfahren nach Anspruch 8, wobei der Post-Kühlvorgang ein Zwei-Qubit-Gatter ist.

10. Verfahren nach Anspruch 1, wobei für jedes Quantenobjekt (5) der Vielzahl von Quantenobjekten die jeweiligen Wärmeakkumulatoren (522A, 522B) mindestens eines von Folgendem umfassen:
einen jeweiligen Wärmeakkumulator (522A, 522B), der dem Quantenobjekt (5) zugeordnet ist, oder
einen oder mehrere modenspezifische Wärmeakkumulatoren, die jeweils einem entsprechenden Bewegungsmodus des Quantenobjekts (5) zugeordnet sind.

11. Verfahren nach Anspruch 1, wobei der repräsentative Wert der maximale Wärmeakkumulatorwert der jeweiligen Wärmeakkumulatoren (522A, 522B) ist, die dem einen oder den mehreren Quantenobjekten (5) zugeordnet sind, die in der einen oder den mehreren ausgewählten Zonen (240A, 240B) eingerichtet sind.

12. Verfahren nach Anspruch 1, wobei der Kühlvorgangsparameter mindestens eines von Folgendem ist:
bestimmt zumindest teilweise basierend auf einer Funktion, die den repräsentativen Wert als Eingabe empfängt,
bestimmt zumindest teilweise basierend auf dem Identifizieren mindestens einer Schwellenwertanforderung, die durch den repräsentativen Parameter erfüllt wird,
bestimmt zumindest teilweise basierend auf dem Vergleichen des repräsentativen Werts mit einem oder mehreren Schwellenwerten, oder
eine Kühlzeit, und der Kühlvorgang für die Kühlzeit durchgeführt wird.

13. Verfahren nach Anspruch 1, wobei die jeweiligen Wärmeakkumulatoren (522A, 522B) als Teil von jeweiligen Qubit-Datensätzen gespeichert sind, die Standortinformationen für das zugeordnete Quantenobjekt (5) umfassen.

14. Steuergerät (30), das dazu konfiguriert ist, den Betrieb einer oder mehrerer Komponenten eines Quantensystems (100) zu steuern, wobei das Quantensystem (100) eine Einschlusseinrichtung (50) umfasst, die dazu konfiguriert ist, eine Vielzahl von Quantenobjekten einzuschließen, wobei das Steuergerät (30) mindestens ein Verarbeitungselement (705) und mindestens einen nicht-flüchtigen Speicher (710) umfasst, wobei der mindestens eine nicht-flüchtige Speicher (710) ausführbare Anweisungen speichert, die dazu konfiguriert sind, das Steuergerät (30) zu veranlassen, das Verfahren nach einem der Ansprüche 1 bis 13 durchzuführen.

15. Quantensystem (100), umfassend ein Steuergerät (30) und eine Einschlusseinrichtung (50), die dazu konfiguriert ist, eine Vielzahl von Quantenobjekten einzuschließen, wobei das Steuergerät (30) dazu konfiguriert ist, den Betrieb einer oder mehrerer Komponenten des Quantensystems (100) zu steuern, um das Quantensystem (100) zu veranlassen, einen bedingten Kühlvorgang durchzuführen, wobei das Steuergerät (30) dazu konfiguriert ist, das Verfahren nach einem der Ansprüche 1 bis 13 durchzuführen.

## Revendications

1. Procédé de réalisation d'une opération de refroidissement, le procédé comprenant :
l'identification, par un dispositif de commande (30) d'un système quantique (100), d'un ou de plusieurs objets quantiques (5) d'une pluralité d'objets quantiques confinés par un appareil de confinement (50) qui sont disposés dans une ou plusieurs zones sélectionnées (240A, 240B) de l'appareil de confinement (50), dans lequel la pluralité d'objets quantiques sont associés à des accumulateurs de chaleur respectifs (522A, 522B) stockés par une mémoire classique (710) accessible au dispositif de commande (30) ;
la détermination, par le dispositif de commande (30), d'une valeur représentative sur la base de valeurs d'accumulateur de chaleur des accumulateurs de chaleur respectifs (522A, 522B) associés aux un ou plusieurs objets quantiques (5) qui sont disposés dans les une ou plusieurs zones sélectionnées (240A, 240B) ;
la détermination, par le dispositif de commande (30), d'un paramètre d'opération de refroidissement sur la base au moins en partie de la valeur représentative ; et
le fait d'entraîner, par le dispositif de commande (30), l'exécution d'une opération de refroidissement dans les une ou plusieurs zones sélectionnées (240A, 240B) de l'appareil de confinement (50) conformément au paramètre d'opération de refroidissement.

2. Procédé selon la revendication 1, comprenant en outre :
le fait d'entraîner, par le dispositif de commande (30), la réalisation d'une opération de transport sur un premier objet quantique (5A) de la pluralité d'objets quantiques ; et
la mise à jour, par le dispositif de commande (30), d'un accumulateur de chaleur respectif (522A, 522B) associé au premier objet quantique (5A) par une valeur de chaleur correspondant à l'opération de transport.

3. Procédé selon la revendication 2, dans lequel la valeur de chaleur correspondant à l'opération de transport est déterminée sur la base au moins en partie d'un type d'opération de transport ou d'un identifiant d'opération configuré pour identifier l'opération de transport.

4. Procédé selon la revendication 3, dans lequel le type de l'opération de transport est au moins l'un des éléments suivants :
l'une d'une catégorie d'opérations de transport ou une opération de transport correspondant à une forme d'onde particulière, ou une opération de transport combinée et la mise à jour de l'accumulateur de chaleur respectif (522A, 522B) associé au premier objet quantique (5A) par la valeur de chaleur correspondant à l'opération de transport comprend (a) l'ajout d'une valeur de chaleur correspondant à l'opération de transport combinée à l'accumulateur de chaleur respectif (522A, 522B) pour déterminer une valeur d'égalisation de pré-chaleur respective et (b) la mise à jour de la valeur d'accumulateur de chaleur respectif pour qu'elle soit égale à une moyenne de la valeur d'égalisation de pré-chaleur respective et d'une valeur d'égalisation de pré-chaleur correspondant à un second objet quantique (5B) qui a été transporté à proximité du premier objet quantique (5A) via l'opération de transport combinée.

5. Procédé selon la revendication 3, dans lequel au moins l'un des éléments suivants : (a) une pluralité de formes d'onde sont stockées dans une mémoire (710) du dispositif de commande (30) et chaque forme d'onde de la pluralité de formes d'onde est configurée pour réaliser une opération de transport respective et est indexée par un identifiant d'opération respectif, une valeur de chaleur respective attribuée à l'identifiant d'opération respectif ou (b) une pluralité de types d'opérations de transport sont définis et chaque type d'opération de transport de la pluralité de types d'opérations de transport se voit attribuer une valeur de chaleur respective.

6. Procédé selon la revendication 5, dans lequel la valeur de chaleur respective attribuée à l'identifiant d'opération respectif ou au type d'opération de transport est déterminée via un processus d'étalonnage.

7. Procédé selon la revendication 1, comprenant en outre, après ou pendant le fait d'entraîner l'exécution de l'opération de refroidissement, la réinitialisation des accumulateurs de chaleur respectifs (522A, 522B) associés aux un ou plusieurs objets quantiques (5) qui sont disposés dans les une ou plusieurs zones sélectionnées (240A, 240B).

8. Procédé selon la revendication 1, comprenant en outre, après le fait d'entraîner l'exécution de l'opération de refroidissement, le fait d'entraîner l'exécution d'une opération de post-refroidissement dans au moins une des zones sélectionnées (240A, 240B).

9. Procédé selon la revendication 8, dans lequel l'opération de post-refroidissement est une porte à deux qubits.

10. Procédé selon la revendication 1, dans lequel, pour chaque objet quantique (5) de la pluralité d'objets quantiques, les accumulateurs de chaleur respectifs (522A, 522B) comprennent au moins l'un des éléments suivants :
un accumulateur de chaleur respectif (522A, 522B) associé à l'objet quantique (5), ou
un ou plusieurs accumulateurs de chaleur spécifiques à un mode, chacun étant associé à un mode de mouvement correspondant de l'objet quantique (5).

11. Procédé selon la revendication 1, dans lequel la valeur représentative est la valeur d'accumulateur de chaleur maximale des accumulateurs de chaleur respectifs (522A, 522B) associés aux un ou plusieurs objets quantiques (5) qui sont disposés dans les une ou plusieurs zones sélectionnées (240A, 240B).

12. Procédé selon la revendication 1, dans lequel le paramètre d'opération de refroidissement est au moins l'un des éléments suivants :
déterminé sur la base au moins en partie d'une fonction qui reçoit la valeur représentative en entrée,
déterminé sur la base au moins en partie de l'identification d'au moins une exigence de seuil qui est satisfaite par le paramètre représentatif,
déterminé sur la base au moins en partie de la comparaison de la valeur représentative aux un ou plusieurs seuils, ou
un temps de refroidissement, et l'opération de refroidissement est réalisée pendant le temps de refroidissement.

13. Procédé selon la revendication 1, dans lequel les accumulateurs de chaleur respectifs (522A, 522B) sont stockés dans le cadre d'enregistrements de qubits respectifs qui comprennent des informations d'emplacement pour l'objet quantique associé (5).

14. Dispositif de commande (30) configuré pour commander le fonctionnement d'un ou de plusieurs composants d'un système quantique (100), le système quantique (100) comprenant un appareil de confinement (50) configuré pour confiner une pluralité d'objets quantiques, le dispositif de commande (30) comprenant au moins un élément de traitement (705) et au moins une mémoire non transitoire (710), l'au moins une mémoire non transitoire (710) stockant des instructions exécutables configurées pour amener le dispositif de commande (30) à réaliser le procédé selon l'une quelconque des revendications 1 à 13.

15. Système quantique (100) comprenant un dispositif de commande (30) et un appareil de confinement (50) configuré pour confiner une pluralité d'objets quantiques, dans lequel le dispositif de commande (30) est configuré pour commander le fonctionnement d'un ou de plusieurs composants du système quantique (100) afin d'amener le système quantique (100) à réaliser une opération de refroidissement conditionnel, dans lequel le dispositif de commande (30) est configuré pour réaliser le procédé selon l'une quelconque des revendications 1 à 13.
